(19) Europäisches Patentamt
European Patent Office
Office européen des brevets

(11) **EP 3 860 163 B1**

(12) **EUROPEAN PATENT SPECIFICATION**

(45) Date of publication and mention
of the grant of the patent:
**12.07.2023 Bulletin 2023/28**

(21) Application number: **20154649.6**

(22) Date of filing: **30.01.2020**

(51) International Patent Classification (IPC):
*H04W 4/021* (2018.01)       *G06F 16/29* (2019.01)
*H04W 4/029* (2018.01)

(52) Cooperative Patent Classification (CPC):
**H04W 4/021; G06F 16/29; H04W 4/029**

(54) **MATCHING LOCATION-RELATED INFORMATION WITH NAME INFORMATION OF POINTS OF INTEREST**

ANPASSUNG VON ORTSBEZOGENEN INFORMATIONEN MIT NAMENSINFORMATIONEN VON INTERESSIERENDEN PUNKTEN

MISE EN CORRESPONDANCE D'INFORMATIONS RELATIVES À L'EMPLACEMENT AVEC DES INFORMATIONS RELATIVES AU NOM DE POINTS D'INTÉRÊT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.08.2021 Bulletin 2021/31**

(73) Proprietor: **HERE Global B.V.**
**5611 Eindhoven (NL)**

(72) Inventors:
• **NURMINEN, Henri Jaakko Julius**
**33100 Tampere (FI)**

• **IVANOV, Pavel**
**33100 Tampere (FI)**
• **WIROLA, Lauri Aarne Johannes**
**33100 Tampere (FI)**

(74) Representative: **Cohausz & Florack**
**Patent- & Rechtsanwälte**
**Partnerschaftsgesellschaft mbB**
**Bleichstraße 14**
**40211 Düsseldorf (DE)**

(56) References cited:
**US-A1- 2015 073 709     US-A1- 2016 019 257**

**Description**

**FIELD OF THE DISCLOSURE**

The invention relates to the field of matching location-related information with name information of points of interest

**BACKGROUND**

Indoor positioning requires novel systems and solutions that are specifically developed and deployed for this purpose. The "traditional" positioning technologies, which are mainly used outdoors, i.e. satellite and cellular positioning technologies, cannot deliver such performance indoors that would enable seamless and equal navigation experience in both environments. The required positioning accuracy (2-3 m), coverage (~100%) and floor detection are challenging to achieve with satisfactory performance levels with the systems and signals that were not designed and specified for the indoor use cases in the first place. Satellite-based (e.g. GNSS) radio navigation signals simply do not penetrate through the walls and roofs for the adequate signal reception and the cellular signals have too narrow bandwidth for accurate ranging by default.

Several indoor-dedicated solutions have already been developed and commercially deployed during the past years e.g. solutions based on pseudolites (GPS-like short-range beacons), ultra-sound positioning, BTLE signals and Wi-Fi fingerprinting. What is typical to these solutions is that they may require either deployment of totally new infrastructure (beacons, tags and so on) or manual exhaustive radio surveying of the buildings including all the floors, spaces and rooms. This is rather expensive and will take a considerable amount of time to build the coverage to the commercially expected level, which in some cases narrowed the potential market segment only to very thin customer base e.g. for health care or dedicated enterprise solutions. Also, the diversity of these technologies makes it difficult to build a globally scalable indoor positioning solution, and the integration and testing will become complex if a large number of technologies needs to be supported in the consumer devices, such as smartphones.

For an indoor positioning solution to be commercially successful, that is, 1) being globally scalable, 2) having low maintenance and deployment costs, and 3) offering acceptable end-user experience, the solution needs to be based on an existing infrastructure in the buildings and on existing capabilities in the consumer devices. This leads to an evident conclusion that the indoor positioning needs to be based on Wi-Fi- and/or Bluetooth (BT)-technologies that are already supported in almost every smartphone, tablet, laptop and even in the majority of the feature phones. It is, thus, required to find a solution that uses the Wi-Fi- and BT-radio signals in such a way that makes it possible to achieve 2-3 m horizontal positioning accuracy, close to 100% floor detection with the ability to quickly build the global coverage for this approach.

For instance, radio-based indoor positioning that models e.g. the Wi-Fi-radio environment (or any similar radio e.g. Bluetooth) from observed Received Signal Strength (RSS)-measurements as 2-dimensional radio maps may be used and is hereby able to capture the dynamics of the indoor radio propagation environment in a compressible and highly accurate way. This makes it possible to achieve unprecedented horizontal positioning accuracy with the Wifi-signals only within the coverage of the created radio maps and also gives highly reliable floor detection.

Huge volumes of indoor Wi-Fi-measurements data could be harvested via crowd-sourcing if the consumer devices were equipped with the necessary functionality to enable the Wi-Fi-data collection as a background process, naturally with the end-user consent. It could also be possible to use volunteers to survey the sites (buildings) in exchange of reward or recognition and get the coverage climbing up globally in the places and venues important for the key customers. However, the technical challenges related to the harvesting, processing, redundancy, ambiguity and storing the crowd-sourced data need to be understood and solved first, before the Wi-Fi-radiomap creation can be based on the fully crowd-sourced data.

Location-related strings (LRSs) of various kind can be an important source of location information indoors. For instance, an LRS may be a string that can be extracted by a smart device from the device environment only within a limited geographical area using one or more device sensors / radios. More generally, a location-related information (LRI) may be a piece of output of the mobile device's sensors that contains location-specific features. Examples of LRIs include photos, videos, audio samples, LRSs.

A typical example of an LRS is a Wi-Fi access point's SSID (service set identifier) that is the human-readable name of the Wi-Fi network given by the network owner. The SSID is an LRS in the sense that it is only observed in the coverage areas of the Wi-Fi networks with this SSID. The SSID may contain location information and information of the environment where the smartphone user is located; for example, the SSID may contain a business name of the enterprise to which the AP belongs, so the SSID may reveal that the user is located close to this enterprise's premises. Other examples of LRSs include the URL (uniform resource locator) in the Bluetooth Low Energy (BLE) signal, the business name in the mobile payment's billing details, and brand/business names extracted from camera output (photos or video).

Some commonly-used enterprise-related LRSs may cause wrong matches. For instance, this use of LRSs is useful only if we can unambiguously match the LRS with a point of interest (POI) such as a name of an enterbrise or a brand. POI names and locations are typically available in electronic maps or specific databases. Matching the LRS with a POI name is straightforward if the LRSs owned by the POI and the POI name are the same or similar enough strings. This is often true when the POI name is a brand of an enterprise and the Wi-Fi access points owned by the same enterprise have similar SSIDs. For example, "HennesEtMauritz" and/or "Hennes&Mauritz" could be used as both Wi-Fi SSIDs and POI names. However, some commonly-used enterprise-related LRSs may cause wrong matches; e.g. the enterprise Hennes&Mauritz might also use SSIDs "H&M" or "HetM". In these cases, the LRS-to-POI name matching cannot be made based on only the string contents.

Therefore, techniques that enable and assist and may be used for automatically determining the mapping from an LRS to a POI name are needed.

US 2016/019257 A1 discloses correlating a wireless access point with a point of interest from a point of interest data store according to a network name and a location of the wireless access point and a name and a location of the point of interest.

## SUMMARY OF SOME EMBODIMENTS OF THE INVENTION

According to an exemplary aspect of the invention, a method is disclosed according to claim 1, which comprises performing for each sample of two or more samples of a plurality of samples, wherein each sample of the plurality of samples is associated with a location and with at least one location-related information, and wherein the at least one location-related information associated with a sample of the plurality of samples was obtained by at least one interface of a mobile device, and wherein each sample of the two or more samples is associated with a same predefined location-related information: identifying at least one name information of at least one point of interest of a plurality of points of interest at least partially based on the location of one or more samples (wherein, e.g. the one or more samples includes the respective sample) of the two or more samples and on a location being associated with a respective point of interest of the at least one point of interest, wherein each point of interest of the plurality of points of interest is associated with a location and with a name information.

The method further comprises determining, for each identified name information, a relation representative being indicative of a relation between the predefined location-related information and the name information.

The method according to the exemplary aspect of the invention may, for example, at least partially be performed by an apparatus, wherein the apparatus may be a mobile payment entity or a component of a mobile payment entity, and, for instance, it may be the mobile payment entity which performs the short-range payment transaction. Or, as an example, the apparatus may be at least one different device (the device being different from the mobile payment entity which performs the short-range payment transaction), wherein the at least one different device may be at least one server.

According to the exemplary aspect of the invention, furthermore, an apparatus is disclosed, which comprises means for at least partially realizing the method according to the exemplary aspect of the invention. The means of the apparatus may be implemented in hardware and/or software. They may comprise for instance at least one processor for executing computer program code for realizing the required functions, at least one memory storing the program code, or both. Alternatively, they could comprise for instance circuitry that is designed to realize the required functions, for instance implemented in a chipset or a chip, like an integrated circuit. In general, the means may comprise for instance one or more processing means such as a processor and a memory. Optionally, the apparatus may comprise various other components, like a radio interface, a data interface, a user interface etc.

For example, the apparatus comprises at least one processor and at least one memory including computer program code, the at least one memory and the computer program code configured to, with the at least one processor, cause an apparatus at least to perform at least partially the method and/or the steps of the method according to the exemplary aspect of the invention.

According to the exemplary aspect of the invention, furthermore, a system is disclosed, which comprises the apparatus.

As an example embodiment, said determining, for each identified name information, a relation representative being indicative of a relation between the predefined location-related information and the name information, is performed at least partially based on at least one sample of the two or more samples associated with a similar or same predefined location-related information and at least partially based on at least one point of interest of the plurality of points of interest, in particular by using a classification algorithm.

As an example embodiment, the relation representative being indicative of a relation between the predefined location-related information and the name information is at least partially determined on a previously determined relation representative being indicative of a relation between the predefined location-related information and the name information if such a previously determined relation representative is available.

As an example embodiment, said identifying at least one name information of at least one point of interest of a plurality of points of interest comprises selecting the at least one point of interest of a plurality of points of interest such that for each selected point of interest the location associated with the respective selected point of interest fulfils a distance criterion with respect to the location associated with the respective sample of the two or more samples.

As an example embodiment, said distance criterion is fulfilled if the distance between the location associated with the respective selected point of interest and the location associated with the respective sample of the two or more samples is less than a predefined distance threshold.

As an example embodiment, the relation representative being indicative of a relation between the predefined location-related information and the respective point of interest is at least partially indicative of a probability that the predefined location-related information matches with the name information.

As an example embodiment, each point of interest of at least one point of interest of the plurality of points of interests is associated with a an identifier of the point of interest, wherein, in particular, the identifier is one of:

- an identifier of an access point, in particular a SSID or an URL;
- an identifier of a business entity, in particular a name of the business entity;
- an identifier of a street, in particular a name of a street;
- an identifier of a building, in particular a name of a building.

As an example, the identifier of an access point, e.g. the SSID, may contain location information and information of the environment where the smartphone user is located; for example, the identifier of an access point may contain a business name of the enterprise to which the access point belongs, so the identifier may reveal that the user is located close to this enterprise's premises. Thus, the identifier of an access point might be assumed to be associated with a point of interest, wherein the point of interest may be an enterprise.

As an example embodiment, the location-related information is represented at least partially by a string.

As an example embodiment, the at least one location-related information associated with a sample of the plurality of samples comprises at least one location-related string being obtained based on the least one interface of the mobile device when obtaining the respective sample, wherein, in particular, a location-related string of the at least one location-related string comprises information regarding the environment of the mobile device when obtaining the respective sample.

As an example embodiment, the at least one location-related information associated with a sample of the plurality of samples comprises at least one location-related identifier, wherein, in particular, the at least one location-related identifier is at least one of:

- an identifier of an access point, in particular a SSID or an URL;
- at least one photo, in particular at least one photo captured at the location associated with the respective sample;
- a name extracted from at least one photo, in particular at least one photo captured at the location associated with the respective sample;
- a name extracted from at least one video, in particular at least one video captured at the location associated with the respective sample;
- a name extracted from at least one audio sample, in particular at least one audio sample captured at the location associated with the respective sample.

For instance, the location-related identifier may represent a location-related name information. As an example, the location-related name-information may be at least one of (i) at least one photo, in particular at least one photo captured at the location associated with the respective sample; (ii) a name extracted from at least one photo, in particular at least one photo captured at the location associated with the respective sample; (iii) a name extracted from at least one video, in particular at least one video captured at the location associated with the respective sample; (iv) name extracted from at least one audio sample, in particular at least one audio sample captured at the location associated with the respective sample.

As an example embodiment, the at least one location-related information associated with a sample of the plurality of samples was obtained by at least one interface of a mobile device, and wherein the at least one interface of the mobile device is at least one of:

- a radio interface;
- a camera;
- a near-field communication interface;
- an audio interface, in particular a microphone.

As an example embodiment, the location associated with a sample of the plurality of samples is representative of a location estimate where the mobile device captured the sample, and wherein, in particular, the location estimate is determined based on at least one of :

- GNSS positioning of the mobile device;
- radio network positioning of the mobile device,
- sensor-based positioning of the mobile device.

As an example embodiment, the location estimate comprises location coordinates being indicative of the position where the mobile device captured the sample, and, wherein, in particular, the location estimate further comprises altitude information and/or a floor index of the location where the mobile device captured the sample.

As an example embodiment, the location of a point of interest of the plurality of points of interest is associated with a location comprising location coordinate being indicative of the point of interest, wherein, in particular, the location comprises, altitude information and/or a floor index of the point of interest.

As an example embodiment, the relation representative being indicative of a relation between the predefined location-related information and the respective point of interest comprises or is associated with at least one of:

- a value $W_{k,l}$ being indicative of a distance measure determined based on an estimated distance indicator between the location of each point of interest of at least one identified point of interest used for determining the respective relation representative and the respective location of the sample $L_{k,i}$ used for identifying the respective point of interest, or
- a value $F_{k,l}$ representing a value being indicative of a name information similarity.

As an example embodiment, comprising updating the plurality of samples, wherein, in particular, said updating the plurality of samples comprises at least one of:

- including at least one new sample in the plurality of samples, wherein each sample of at least one new sample is associated with a location and with at least one location-related information, and wherein the at least one location-related information associated with a sample of the at least one new sample was obtained by at least one interface of a mobile device;
- removing at least one sample of the plurality of samples.

As an example embodiment, comprising a machine learning algorithm for said determining, for each identified point of interest, a relation representative being indicative of a relation between the predefined location-related information and the respective point of interest, wherein, in particular, said machine learning algorithm is one of:

- a Bayesian method,
- a neural network,
- a support vector machine,
- a nearest neighbor algorithm,
- a decision tree.

As an example embodiment, comprising identifying at least one location-related information, wherein each location-information related information of the identified at least one location-related information is associated with at least a predefined minimum number of samples of the plurality of samples, and performing, for each identified location-related information, the method according to any of the preceding claims, wherein the respective identified location-related information represents the predefined location-related information, and, wherein, in particular, the predefined minimum number of samples of the plurality of samples is one of:

- 2;
- 5;
- 10;
- 15.

As an example embodiment, comprising:

- selecting a location-related information of a sample of the plurality of samples, wherein the selected location-related information is associated with at least one relation representative, wherein each relation representative of the at least one relation representative is indicative of a relation between the selected location-related information and a name information, and

- determining, if possible, which name information can be linked with the selected location-related information at least partially based on the at least one relation representative associated with the selected location-relation information.

As an example embodiment, wherein said determining, if possible, which point of interest can be linked with selected location-related information at least partially based on the at least one relation representative associated with the selected location-relation information, comprises:

- determining a relation representative of the at least one relation representative which fulfills a matching criterion, and
- linking the point of interest associated with the determined relation representative to the selected location-related information.

As an example embodiment, wherein each relation representative of the at least one relation representative comprises a weight and a counter of the respective relation representative being indicative of the number of samples counts used for determining the respective relation representative, and wherein the matching criterion is fulfilled for a relation representative if:

- the counter of the respective relation representative exceeds a predefined counter threshold; and

- the weight of the respective relation representative indicates the highest quality of relation of each weight of one or more relation representative of the at least one relation representative, wherein the counter of each relation representative of the one or more relation representative exceeds the predefined counter threshold.

As an example embodiment, comprising, for each relation representative of the at least one relation representative:

- determining a probability value being indicative of an estimation of a relation between the selected location-related information and the point of interest associated with the relation representative at least partially based on the respective relation representative;
  wherein the method further comprises
- determining a relation representative of the at least one relation representative which fulfills a matching criterion by determining the relation representative for which the highest probability value relation representative is determined,
- wherein, in particular:
- the highest probability value must exceed a predefined probability threshold, and if the highest probability value does not exceed the predefined probability threshold, not determining a relation representative and not linking the relation representative to the selected location-related information.

As an example embodiment, each relation representative of the at least one relation representative comprises a probability value and a counter of the respective relation representative being indicative of the number of samples counts used for determining the respective relation representative, and wherein said determining a probability value being indicative of an estimation of a relation between the selected location-related information and the name information associated with the relation representative at least partially based on the respective relation representative comprises determining the probability at least partially based on the weight of the respective relation representative and the counter of the respective relation representative.

As an example embodiment, wherein each relation representative of the at least one relation representative further comprises a similarity measure, and wherein said determining a probability value being indicative of an estimation of a relation between the selected location-related information and the point of interest associated with the relation representative is further at least partially based on the similarity measure of the respective relation representative.

As an example embodiment, wherein it is determined not to be possible to link a point of interest information with the selected location-related information if at least one of the following holds:

- the counter of each relation representative of the at least one relation representative is not higher than a predefined counter threshold; and
- the maximum distance between the location of two samples of the two or more samples associated with the selected location-related information is below a predefined second distance threshold.

As an example embodiment, comprising combining at least two samples of the plurality of samples to one combined sample and replacing the at least two samples with the combined sample in the plurality of samples.

As an example embodiment, wherein at least two samples are combined if the two samples are obtained by the same radio interface of a mobile device and contain correlated information.

As an example embodiment, comprising identifying at least one set of two or more samples of the plurality of samples, wherein each sample of each set of the two or more samples are associated with a similar or same predefined location-related information.

As an example embodiment, comprising selecting a location-related information and determining a location-related information being associated with an identified set of two or more samples that at least partially matches with the selected location-related information.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

**BRIEF DESCRIPTION OF THE FIGURES**

Fig. 1　　is a schematic block diagram of an example embodiment of an apparatus according to the invention;

Fig. 2a　　is a flow chart illustrating an example embodiment of a method 200 according to the invention (which may represent an example operation in the apparatus of Figure 1);

Fig. 2b　　is a flow chart illustrating an example embodiment of a method 200' according to the invention (which may represent an example operation in the apparatus of Figure 1);

Fig. 3　　is an example of a plurality of samples obtained in at least one environment;

Fig. 4　　is a flow chart illustrating an example embodiment of a method 400 according to the invention (which may represent an example operation in the apparatus of Figure 1);

Fig. 5a　　is a flow chart illustrating an example embodiment of a method 500 according to the invention (which may represent an example operation in the apparatus of Figure 1);

Fig. 5b　　is a flow chart illustrating an example embodiment of a method 500' according to the invention (which may represent an example operation in the apparatus of Figure 1);

Fig. 6　　is a flow chart illustrating an example embodiment of a method 600 according to the invention (which may represent an example operation in the apparatus of Figure 1);

Fig. 7　　is a flow chart illustrating an example embodiment of a method 700 according to the invention (which may represent an example operation in the apparatus of Figure 1);

Fig. 8　　is a block diagram of an exemplary embodiment of an apparatus, which might be a server, according to the invention; and

Fig. 9　　is a schematic illustration of examples of tangible and non-transitory storage media according to the invention.

The following description serves to deepen the understanding of the present invention and shall be understood to complement and be read together with the description of example embodiments of the invention as provided in the above SUMMARY section of this specification.

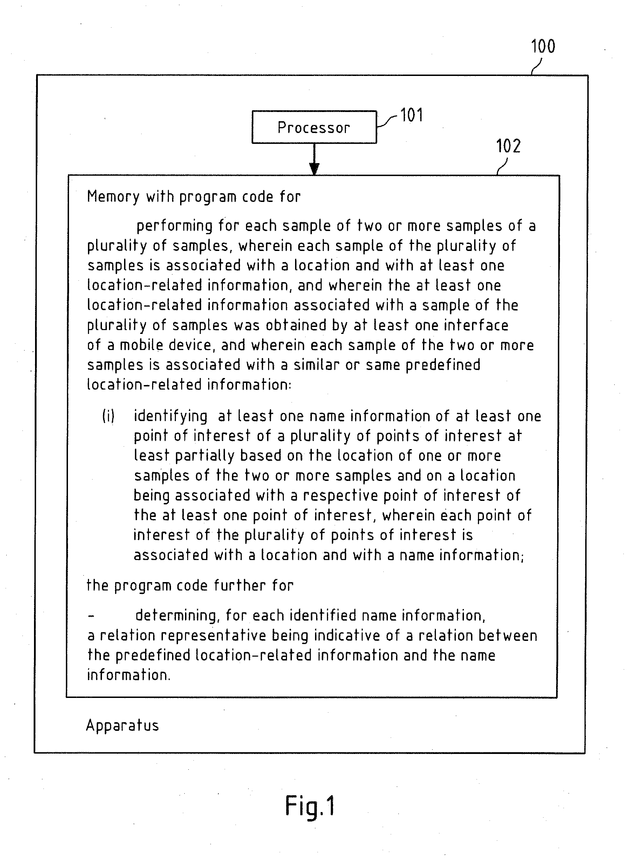

Figure 1 is a schematic block diagram of an example embodiment of an apparatus according to the invention. Apparatus 100 comprises a processor 101 and, linked to processor 101, a memory 102. Memory 102 stores computer program code for holding available data associated with at least one road segment and for providing safety data. Processor 101 is configured to execute computer program code stored in memory 102 in order to cause an apparatus to perform desired actions. Memory 102 is thus an example embodiment of a non-transitory computer readable storage medium, in which computer program code according to the invention is stored. For instance, memory 102 may store computer program code for performing, for each sample of two or more samples of a plurality of samples, wherein each sample of the plurality of samples is associated with a location and with at least one location-related information, and wherein the at least one location-related information associated with a sample of the plurality of samples was obtained by at least one interface of a mobile device, and wherein each sample of the two or more samples is associated with a similar or same predefined location-related information: identifying at least one name information of at least one point of interest of a plurality of points of interest at least partially based on the location of the respective sample of the two or more samples and on a location being associated with a respective point of interest of the at least one point of interest, wherein each point of interest of the plurality of points of interest is associated with a location and with a name information. Furthermore, the computer program code may be for determining, for each identified name information, a relation representative being indicative of a relation between the predefined location-related information and the name information.

Apparatus 100 could be a server or a cloud component or any other kind of mobile or stationary device. For instance, said apparatus 100 may represent a plurality of apparatus are used, wherein each apparatus may comprise a processor 101, and linked to processor 101, a memory 102, wherein memory 102 at least partially stores computer program code for performing, for each sample of two or more samples of a plurality of samples, wherein each sample of the plurality of samples is associated with a location and with at least one location-related information, and wherein the at least one location-related information associated with a sample of the plurality of samples was obtained by at least one interface of a mobile device, and wherein each sample of the two or more samples is associated with a similar or same predefined location-related information: identifying at least one name information of at least one point of interest of a plurality of points of interest at least partially based on the location of the respective sample of the two or more samples and on a location being associated with a respective point of interest of the at least one point of interest, wherein each point of interest of the plurality of points of interest is associated with a location and with a name information. Furthermore, the computer program code may be for determining, for each identified name information, a relation representative being indicative of a relation between the predefined location-related information and the name information.

Apparatus 100 could equally be a component, like a chip, circuitry on a chip or a plug-in board, for any server, mobile or stationary device. Optionally, apparatus 100 could comprise various other components, like a data interface configured to enable an exchange of data with separate devices, a user interface like a touchscreen, a further memory, a further processor, etc.

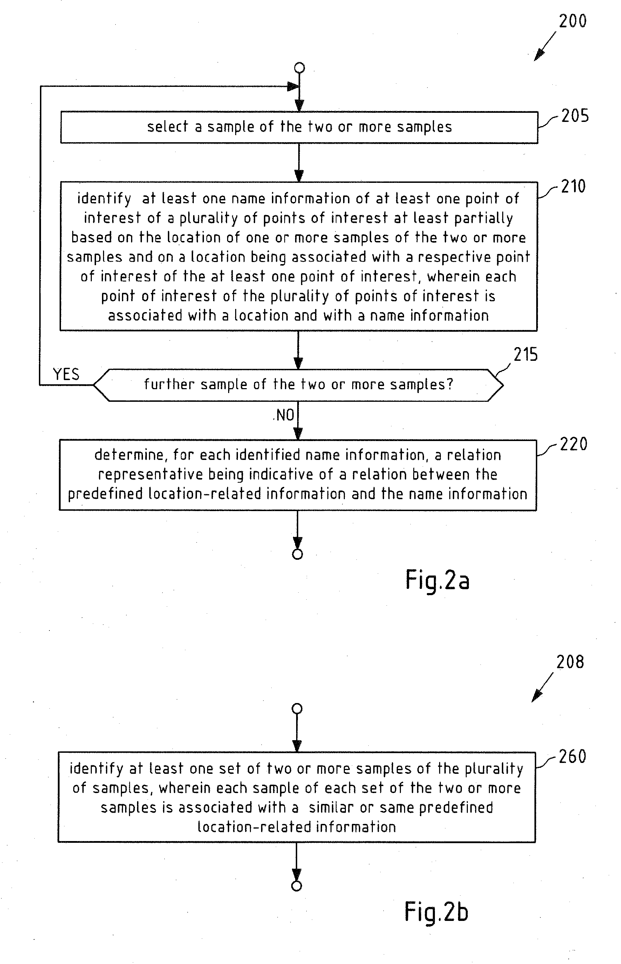

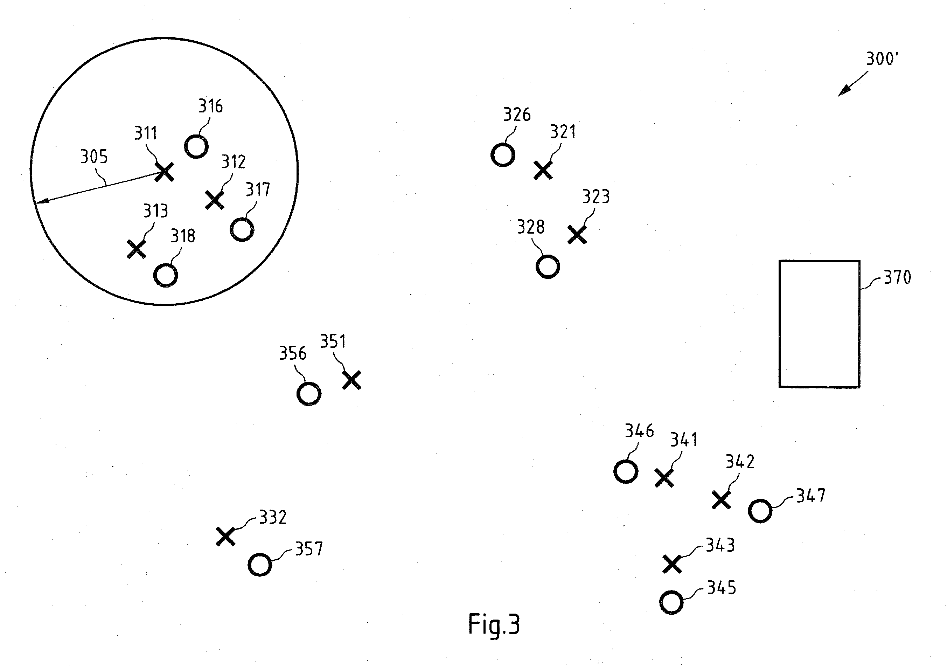

An operation of the apparatus 100 will now be described with reference to the flow chart 200 of Figure 2 and, as an example, with respect to the example of a plurality of samples 311, 312, 313, 321, 323, 332, 341, 342, 343 obtained by at least one mobile device in at least one environment 300 depicted in Fig. 3 and with respect to the example of a system 300' depicted in Fig. 3 . The operation is an example embodiment of a method according to the invention. At least one processor 101 (may be one processor 101 or a plurality of processors 101) and the program code stored in at least one memory 102 (may be one memory 102 or a plurality of memories 102) cause at least one apparatus (may be one apparatus or a plurality of apparatuses) to perform the operation when the program code is retrieved from memory 102 and executed by processor 101. The at least one apparatus that is caused to perform the operation can be apparatus 100 or some other apparatus, for example but not necessarily a device comprising apparatus 100.

For instance, said system 300' might comprise server 370, which might be a positioning server 370. For instance, server 370 might comprise apparatus 100.

The apparatus 100 performs, for each sample of two or more samples of a plurality of samples 311, 312, 313, 321, 323, 332, 341, 342, 343, wherein each sample of the plurality of samples 311, 312, 313, 321, 323, 332, 341, 342, 343 is associated with a location and with at least one location-related information, and wherein the at least one location-related information associated with a sample of the plurality of samples 311, 312, 313, 321, 323, 332, 341, 342, 343 was obtained by at least one interface of a mobile device, and wherein each sample of the two or more samples is associated with a similar or same predefined location-related information: (i) identifying for the respective predefined location-related information at least one name information of a point of interest of a plurality of points of interest at least partially based on the location of the respective sample of the two or more samples and on a location being associated with a respective point of interest of the at least one point of interest, wherein each point of interest of the plurality of points of interest is associated with a location and with a name information (action 210); and determining, for each identified name information a point of interest, a relation representative being indicative of a relation between the predefined location-related information and the respective name information of the point of interest of a point of interest (action 220).

For example, each of mobile devices may be one of a smartphone, a tablet computer, a notebook computer, a smart watch and a smart band. Mobile devices may be enabled for or support non-GNSS based radio positioning system 300.

A sample of the plurality of samples 311, 312, 313, 321, 323, 332, 341, 342, 343 is obtained by at least one interface of a mobile device and is associated with a location and with at least one location-related information.

For instance, the location associated with a sample of the plurality of samples 311, 312, 313, 321, 323, 332, 341, 342, 343 may be the location where the respective sample was obtained by the respective mobile device, wherein the location may be georeference. As an example, the location might be determined by the respective mobile device by means of a positioning engine, e.g. GNSS-based and/or based on radio-network based positioning and/or based on sensor-based-positioning, wherein this positioning engine may be part of the respective mobile device or, as an example, may be part of an external apparatus (e.g. a server) which determines the position of the respective mobile device. For instance, the location of the respective sample might comprise a location estimate comprising location coordinates being indicative of the position where the mobile device captured the sample, and, wherein, in particular, the location estimate may further comprises altitude information and/or a floor index of the location where the mobile device captured the sample.

For instance, a location-related information (LRI) may be a piece of output of the mobile device's sensors that contains location-specific features. Examples of LRIs include photos, videos, audio samples, LRSs.

As an example, the at least one location-related information associated with a sample of the plurality of samples might comprise at least one location-related identifier (e.g. a location-related name-information), wherein, in particular, the at least one location-related identifier is at least one of: (i) an identifier of an access point, in particular a SSID or an URL; ; (ii) at least one photo, in particular at least one photo captured at the location associated with the respective sample (iii) a name extracted from at least one photo, in particular at least one photo captured at the location associated with the respective sample; (iv) a name extracted from at least one video, in particular at least one video captured at the location associated with the respective sample; or (v) a name extracted from at least one audio sample, in particular at least one audio sample captured at the location associated with the respective sample.

For instance, a photo itself might be considered to represent a location-related identifier.

The location-related information associated with a sample of the plurality of samples 311, 312, 313, 321, 323, 332, 341, 342, 343 may represent a location-relation information obtained by and/or based on at least one interface of the respective mobile device at a location where the respective mobile device obtained this sample. For instance, the location-related information associated with a sample of the plurality of samples 311, 312, 313, 321, 323, 332, 341, 342, 343 may represent information of the environment where the mobile device is located and where the mobile device obtained the sample. The location-related information might comprise a string (e.g. a plurality of characters) being indicative of information of at least a part of the environment where the mobile device is located when obtaining the respective sample. For instance, the string may be indicative of an object of the environment (e.g. an enterprise and a shop in the environment), wherein the string may comprise a name or a part of a name being descriptive of the enterprise and a shop in the environment.

Thus, for instance, the at least one location-related information associated with a sample of the plurality of samples may comprise at least one location-related string being obtained based on the least one interface of the mobile device when obtaining the respective sample, wherein, in particular, a location-related string of the at least one location-related string comprises information regarding the environment of the mobile device when obtaining the respective sample.

As an example, the location-related information associated with a sample of the plurality of samples 311, 312, 313, 321, 323, 332, 341, 342, 343 may represent location-related information obtained by and/or received by a wireless interface of the respective mobile device, e.g. a Wifi-interface or a short-range wireless interface (e.g. Bluetooth or Bluetooth Low Energy or NFC) at the respective location. The respective mobile device may be connected to a wireless access point and might obtain the location-related information from a wireless signal received from the wireless access point via the wireless interface at the respective location. For instance, this location-related information might comprise an identifier of the wireless access point, e.g. a service set identifier (SSID) of the wireless access point, wherein, as an example, this identifier might contain a name (e.g. a business name) of the environment where the mobile-device is located. As a non-limiting example, reference sign 316 in Fig. 3a may represent a wireless access point (e.g. a radio node - a radio node might be considered to be a wireless access point) of particular shop in the environment and a mobile-device may obtain a sample 311 (of the plurality of samples 311, 312, 313, 321, 323, 332, 341, 342, 343) at a location in this environment, wherein this sample may be associated with a location-related information obtained by a wireless interface of the mobile-device received from the wireless access point 316 and wherein the location-related information may comprise an identifier of the wireless access point 316. For instance, this identifier might represent a string and might comprise a name or a part of a name associated with an enterprise for which the wireless access point 316 belongs.

And/or, as another example, the location-related information obtained by and/or received by a wireless interface of the respective mobile device might comprise a uniform resource location (URL) which is received via the wireless interface of the respective mobile device at the location in the environment (when the respective sample is obtained) from a wireless access point, wherein this URL might include a name or a part of a name of the enterprise associated with the wireless access point, and/or, the location-related information obtained by and/or received by a wireless interface of the respective mobile device might comprise a brand and/or business name or a part of a name received from an wireless access point, e.g. during performing a mobile payment with the mobile-device at a respective wireless access point (e.g. a BLE or NFC wireless access point of a cashier of a shop).

And/or, as a further example, the at least one interface of a mobile device which obtains a sample of the plurality of samples 311, 312, 313, 321, 323, 332, 341, 342, 343 might comprise a camera such that the location-related information obtained by the mobile device by means of a the camera might comprise a name or a part of a name extracted (e.g. by means of optical character recognition) from at least one picture taken at the location (associated with the sample) with the camera of the mobile device. For instance, the name or a part of a name may be the name or a part of a name of a enterprise and/or shop in the environment where the mobile-device took the at least one picture.

And/or, as a further example, the at least one interface of a mobile device which obtains a sample of the plurality of samples 311, 312, 313, 321, 323, 332, 341, 342, 343 might comprise a microphone such that the location-related information obtained by the mobile device by means of a the microphone might comprise a name or a part of a name extracted (e.g. by means voice recognition) from at sound sample recorded at the location (associated with the sample) with the microphone of the mobile device. For instance, the name or a part of a name may be the name or a part of a name of a enterprise and/or shop in the environment where the mobile-device recorded the sound sample.

Therefore, as an example, the at least one location-related information associated with a sample of the plurality of samples was obtained by at least one interface of a mobile device, and wherein the at least one interface of the mobile device is at least one of:

- a radio interface (e.g. for obtaining SSIDs or BLE URLs as location-related information);
- a camera (e.g. for obtaining business name(s) from photos or videos captures by the camera);
- a near-field communication interface (e.g. for obtaining mobile payment's business names as location-related information);
- an audio interface, in particular a microphone (e.g. for extracting business names from audio signals as location-related information).

As an example, the location associated with a sample of the plurality of samples is representative of a location estimate where the mobile device captured the sample, and wherein, in particular, the location estimate is determined based on at least one of:

- GNSS positioning of the mobile device;
- radio network positioning of the mobile device,
- sensor-based positioning of the mobile device.

Thus, a plurality of samples 311, 312, 313, 321, 323, 332, 341, 342, 343 may be obtained by at least one mobile device, wherein each sample of the plurality of samples 311, 312, 313, 321, 323, 332, 341, 342, 343 is associated with a location and with at least one location-related information, and wherein the at least one location-related information associated with a sample of the plurality of samples 311, 312, 313, 321, 323, 332, 341, 342, 343 was obtained by at least one interface of the respective mobile device. As a non-limiting example, this plurality of samples 311, 312, 313, 321, 323, 332, 341, 342, 343 may be obtained by crowd-sourcing and might be gathered and/or stored in a database, e.g. a database of a server 370. Furthermore, this plurality of samples 311, 312, 313, 321, 323, 332, 341, 342, 343 may be updated (e.g. extended and/or at least partially replaced) during a crowd-sourcing process.

Furthermore, there may be a plurality of points of interests, wherein each point of interest of the plurality of point of interests is associated with a location (of the point of interest) and with a name information of the point of interest. For instance, this name information being indicative of the point of interest may be an identifier of the point of interest (POI) and might represent a name of the point of interest (e.g. a name or a part of a name of an enterprise or shop of this POI) or another representation of the identifier of the POI. For instance, the identifier of the POI may be represented by a string (e.g. at least two characters). As an example, this plurality of points of interest may be stored in a database, e.g. in the same database as the database comprising the plurality of samples 311, 312, 313, 321, 323, 332, 341, 342, 343 or in another database.

For instance, each point of interest of the plurality of points of interests is associated with a name information, wherein the name information is an identifier of the point of interest, wherein, in particular, the identifier is one of: (i) an identifier of an access point, in particular a SSID or an URL; (ii) an identifier of a business entity, in particular a name of the business entity; (iii) an identifier of a street, in particular a name of a street; or (iv) an identifier of a building, in particular a name of a building.

As an example, the identifier of an access point, e.g. the SSID, may contain location information and information of the environment where the smartphone user is located; for example, the identifier of an access point may contain a business name of the enterprise to which the access point belongs, so the identifier may reveal that the user is located close to this enterprise's premises.

With respect to the method 200 depicted in Fig. 2a, action 210 is performed for each sample of two or more samples of the plurality of samples 311, 312, 313, 321, 323, 332, 341, 342, 343, wherein each sample of the two or more samples is associated with a similar or same predefined location-related information. Thus, as an example, method 200 may comprise identifying two or more samples of the plurality of samples 311, 312, 313, 321, 323, 332, 341, 342, 343, wherein the identified two or more samples are associated with a similar or same predefined location-related information. For instance, the location-related information of each sample of the two or more samples comprise information of the environment, e.g. a string being indicative of an object of the environment (e.g. an enterprise and a shop in the environment), wherein the string may comprise a name or a part of a name being descriptive of the enterprise and a shop in the environment, wherein the information of the environment of the different samples of the two or more samples is similar and/or is same, e.g. the same or similar name or the same or similar part of a name.

As a non-limiting example, samples 311 and 351 may be associated with a location-related information comprising a string "H&M" representing a name of a respective shop, samples 321 and 341 may be associated with a location-related information comprising a string "Hennes&Mauritz" of a respective shop. Then, for instance, samples 311, 321, 341 and 351 might be identified as said two or more samples of the plurality of samples 311, 312, 313, 321, 323, 332, 341, 342, 343, since the location-related information of each sample of the two or more samples 311, 321, 341 and 351 is the same or is at least similar to the related location-related information of the remaining samples of the two or more samples 311, 321, 341 and 351.

Apparatus 100 performs the action 210 for each sample of the two or more samples (e.g. samples 321, 321, 341 and 351) of the plurality of samples (e.g. samples 311, 312, 313, 321, 323, 332, 341, 342, 343).

E.g., in action 210 a sample of the two or more samples may be selected and action 210 may be performed for the selected sample (i.e., the respective sample of the two or more samples). In action 215 it may be checked whether there is a further sample of the two or more samples and if yes, method 200 may jump to action 205 in order to select this further sample of the two or more samples. If all samples of the two or more samples have been selected and action 210 has been performed for each of the two or more samples, the check in action 215 may yield in the result that there is not further sample of the two or more samples and method 200 may proceed with action 220. It has to be understood that this is just an example and that parts of action 220 may be included in action 210, e.g. as will be exemplarily explained with respect to method 400.

In action 210, apparatus 100 identifies (e.g. for the respective predefined location-related information associated with the two or more samples of the plurality of samples) at least one name information of at least one point of interest of the plurality of points of interest at least partially based on the location of the respective sample of the two or more samples and on a location being associated with a point of interest of the at least one point of interest. For instance, in action 210 it may be checked whether the location associated with a point of interest of the plurality of points of interest fulfills a distance criterion with respect to the location of the respective sample of the two or more samples, and if yes, the name information of this point of interest (e.g. the name of this point of interest or the identifier of this point of interest) is identified and is part of the identified at least one name information a point of interest, and, e.g., if the distance criterion is not fulfilled, this point of interest is not identified and the name information of this point of interest is not selected to be part of the identified at least one name information of a point of interest. Thus, as an example, in action 210 said identifying at least one name information of at least one point of interest of a plurality of points of interest might comprise selecting the at least one point of interest of a plurality of points of interest such that for each selected point of interest the location associated with the respective selected point of interest fulfils a distance criterion with respect to the location associated with the respective sample of the two or more samples.

Furthermore, for instance, the same name information of a point of interest may be associated with two or more points of interests of the plurality of points of interest. Thus, the location of a first point of interest of the plurality of points of interest may fulfill the distance criterion with respect to the location of the respective sample of the two or more samples and the location of a second point of interest of the plurality of points of interest may fulfill the distance criterion with respect to the location of the respective sample, wherein, e.g., the name information of the first point of interest may be the same as the name information of the second point of interest. In this case, this name information (of the first point of interest as well as of the second point of interest) is identified is part of the identified at least one name information a point of interest.

For instance, the distance criterion may be fulfilled if the distance between the location of a respective point of interest of the plurality of points of interest and the location of the respective sample of the two or more samples is below (or equal to) a predefined distance threshold, wherein, as an example, this predefined distance threshold may be 250m, or 200m, or 100m, or 50m, or 20m or 10m or any other well-suited distance. Therefore, e.g., in action 210 only that at least one point of interest of the plurality of points of interest is identified which is sufficiently close to the respective sample of the two or more samples. E.g., the location of the respective sample of the two or more samples may be represented by 2D or 3D coordinates, wherein in case of 2D coordinates the location might comprise latitude and longitude and in case of 3D coordinates the location might comprise latitude, longitude and altitude and/or floor information (e.g. floor index). Furthermore, the location of a respective point of interest of the plurality of points of interest may be represented by 2D or 3D coordinates, wherein in case of 2D coordinates the location might comprise latitude and longitude and in case of 3D coordinates the location might comprise latitude, longitude and altitude and/or floor information (e.g. floor index)

As an example, if the respective sample of the two or more samples 321, 321, 341 and 351 is sample 311 depicted in Fig. 3a then in action 310 the name information of point of interest 316, the name information of point of interest 317 and the name information of point of interest 318 might be identified to be the identified at least one point of interest 316, 317 and 318 of the plurality of points of interest 316, 317, 318, 326, 328, 337, 346, 347, 348 and 356 since the location of each of the points of interest 316, 317 and 318 fulfills a distance criterion with respect to location of the respective sample 311, e.g., the location of each of the points of interest 316, 317 and 318 is within a specific distance threshold 305 compared to the location of the respective sample 311 (in Fig. 3a an example of a distance threshold 305 is represented by a predefined radius around the location of the respective sample 311, wherein the radius may be 250m, or 200m, or 100m, or 50m, or 20m or 10 or any other well-suited radius). For instance, if the location of the respective point of interest and the location of the respective sample of the two or more samples is represented by 3D coordinates, the specific distance threshold 305 of the distance criterion may be configured to cover the 3D coordinate case.

Thus, for instance, in action 210 at least one name information of at least one point of interest of the plurality of points of interest is identified, wherein the location of each of the at least one point of interest fulfills a distance criterion with respect to the location of the respective sample of the two or more samples.

For instance, after the at least one name information of at least one point of interest is identified for the respective sample of the two or more samples (associated with a similar or same predefined location-related information) in action 210, if there is a further sample of the two or more samples for which action 210 has not been performed, apparatus 100 performs actions 210 for this sample and identifies at least one name information of at least one point of interest of the plurality of points of interest at least partially based on the location of the respective sample (i.e., this further sample) of the two or more samples and on a location being associated with a point of interest of the at least one point of interest. After action 210 has been performed for each sample of the two or more samples (associated with a similar or same predefined location-related information), at least one name information of at least one point of interest is identified (wherein the at least one name information comprises each name information identified when action 210 has been performed for each sample of the two or more samples). Thus, the identified at least one name information being identified by performing action 210 for each sample of the two or more samples (associated with a similar or same predefined location-related information) might be considered to be associated with the similar or same predefined location-related information (since each of the two or more samples is associated with the similar or same predefined location-related information).

As an example, LRI=k may be indicative of a specific similar or same predefined location-related information, e.g., in the above example the specific similar and/or same predefined location-related information "H&M", "Hennes&Mauritz".

Therefore, for instance, the two or more samples being associated with a similar or same predefined location-related information may be considered to represent two or more samples being associated with a specific LRI, e.g. LRI=k.

The apparatus 100 determines, for each name information the at least one identified name information (of the respective sample of the two or more samples), a relation representative being indicative of a relation between the respective name information and the (similar or same) predefined location-related information (action 220).

As a non-limiting example, a relation representative being indicative of a relation between an identified name information and the (similar or same) predefined location-related information (associated with the two or more samples) may be indicative of a probability that the identified name information matches with the (similar or same) predefined location-related information.

Therefore, apparatus 100 may be configured to perform action 210 of method 200 for each sample of the two or more samples of the plurality of samples, wherein each sample of the two or more samples is associated with a similar or same predefined location-related information.

As an example, LRI=k may be indicative of a specific similar or same predefined location-related information, e.g., in the above example the specific similar and/or same predefined location-related information "H&M", "Hennes&Mauritz".

The two or more samples of the plurality of samples, wherein each sample of the two or more samples is associated with a similar or same predefined location-related information may be denoted as samples $L_{LRI=k,i}$ (k indicating the similar or same predefined location-related information) and $i \in \{1,...,n\}$, wherein n represents the number of the two or more samples and wherein $n \geq 2$ holds.

Then, action 210 is performed for each sample of the two or more samples of the plurality of samples, i.e., for each $L_{k,i}$ with $i \in \{1,...,n\}$ such that for each $L_{k,i}$ with $i \in \{1,...,n\}$ at least one name information $\underline{N}_{k,i,l}$ is identified with $l \in \{1,...,m^i\}$ and $m^i$ representing the number of the identified name information(s) for the respective sample $L_{k,i}$. It has to be understood that number $m^i$ may vary for a different sample of the two or more samples of the plurality of samples, e.g., for i=1 the value of m may be 3 and for i=2 the value of m may be 4. Thus, the number $m^i$ may be specific for each i-th sample $L_{k,l}$ of the two or more samples of the plurality of samples. As an example, in action 210 for a respective sample

$L_{k,i}$ at least one point of interest $POI_{k,i,p}$ ($p \in \{1,...,t^i\}$) of the plurality of points of interest is identified, wherein the location of each of the identified at least one point of interest $POI_{k,i,p}$ ($t \in \{1,..., t^i\}$) fulfills a distance criterion with respect to location of the respective sample $L_{k,i}$, as described above, such that the at least one name information $\underline{N}_{k,i,l}$ (with $l \in \{1,..., m^i\}$) is identified based on the name information of the identified at least one point of interest $POI_{k,i,p}$ ($p \in \{1,..., t^i\}$), e.g. such that the at least one name information $\underline{N}_{k,i,l}$ (with $l \in \{1,..., m^i\}$) might comprise any name information of the identified at least one point of interest $POI_{k,i,p}$ ($p \in \{1,..., t^i\}$).

After action 210 has been performed for each sample $L_{k,i}$ of the two or more samples of the plurality of samples (associated with a similar or same predefined location-related information LRI=k), at least one name information $N_{k,l}$ with $l \in \{1,...,s\}$ and s representing the number of the (different) identified different name information(s) for all samples sample $L_{k,i}$ (with $i \in \{1,...,n\}$) which comprises each name information $\underline{N}_{k,i,l}$ (with $i \in \{1,...,n\}$ and $l \in \{1,..., m^i\}$ ) identified when action 210 has been performed for each sample $L_{k,i}$ of the two or more samples. Thus, the identified at least one name information $N_{k,l}$ with $l \in \{1,...,s\}$ being identified by performing action 210 for each sample $L_{k,i}$ of the two or more samples (associated with a similar or same predefined location-related information) might be considered to be associated with the similar or same predefined location-related information (since each of the two or more samples is associated with the similar or same predefined location-related information), i.e., being associated with LRI=k. It has to be understood that, e.g., if the same name information $\underline{N}_{k,i}$ has been identified twice or more when performing action 210 or each sample $L_{k,i}$ of the two or more samples of the plurality of samples, this name information $\underline{N}_{k,i}$ only occurs once in the at least one name information $N_{k,l}$ with $l \in \{1,...,s\}$, and therefore $s \leq \sum_{i=1}^{n} m^i$ holds.

In action 220, for each identified name information $N_{k,l}$ with $l \in \{1,...,s\}$ (being identified in actions 210 when performed for each sample $L_{k,i}$ of the two or more samples of the plurality of samples (associated with a similar or same predefined location-related information LRI=k) a relation representative $W_{k,l}$ (with $l \in \{1,...,s\}$) being indicative of a relation between the predefined location-related information LRI=k and the respective name information $N_{k,l}$ of the identified at least one name information $N_{k,l}$ is determined (action 220), e.g. as explained above.

For instance, said relation representative $W_{k,l}$ might be determined at least partially based on at least sample of the two or more samples (associated with a similar or same predefined location-related information LRI=k) and, e.g., at least partially based on one more other samples of the plurality of samples, and might be determined at least partially based on at least one point of interest of the plurality of points of interest.

As an example, for the predefined location-related information LRI=k and for each sample $L_{k,i}$ of the two or more samples associated with a similar or same predefined location-related information LRI=k, one or more pairs of the respective sample $L_{k,i}$ and each identified name information $\underline{N}_{k,i,v}$ of the at least one name information $\underline{N}_{k,i,v}$ with $v \in \{1,..., m^i\}$ may be denoted as $(L_{k,i}, \underline{N}_{k,i,1})$, $(L_{k,i}, \underline{N}_{k,i,2})$ ... $(L_{k,i}, \underline{N}_{k,i,m^i})$, wherein the one or more pairs $(L_{k,i}, \underline{N}_{k,i,1})$, $(L_{k,i}, \underline{N}_{k,i,2})$ ... $(L_{k,i}, \underline{N}_{k,i,m^i})$ (may be denoted as LRI-name information pair) for each sample $L_{k,i}$ of the two or more samples (with $i \in \{1,...,n\}$ may be used as training input for an algorithm for determining the one or more relation representatives $W_{k,l}$ (with $l \in \{1,...,s\}$), e.g. by using a classification algorithm and by using at least partially one or more samples of the plurality of samples (e.g. at least partially based on the two or more samples associated with a similar or same predefined location-related information LRI=k) and/or by using at least based on at least one point of interest of the plurality of points of interests, e.g., in particular based at least partially on the one or more points of interest $POI_{k,i,p}$ ($p \in \{1,..., t^i\}$) being identified for each sample $L_{k,i}$ of the two or more samples associated with a similar or same predefined location-related information LRI=k. For instance, said classification algorithm may be a Bayesian method, or a neural network, or a support vector machine, or a nearest neighbor algorithm, or a decision tree, or any-other well suited algorithm.

Thus, for instance, said determining, for each identified name information, a relation representative being indicative of a relation between the predefined location-related information and the name information in action 220, might be performed at least partially based on at least one sample of the two or more samples associated with a similar or same predefined location-related information and at least partially based on at least one point of interest of the plurality of points of interest, in particular by using a classification algorithm.

Thus, after action 210 of method 200 has been performed for each sample $L_{k,i}$ of the two or more samples $L_{k,i}$, with $i \in \{1,...,n\}$ and action 220 of the method has been performed, there are s relation representative(s) $R_{k,l}$ with $l \in \{1,...,s\}$, a relation representative $R_{k,l}$ being indicative of a relation between the respective predefined location-related information LRI=k and the respective name information $N_{k,l}$. For instance a higher value of a relation representative $R_{k,l}$ might indicate that there is a higher probability that the respective location-related information LRI=k matches with the respective name information $N_{k,l}$. compared to a lower value of $R_{k,l}$, or, e.g., vice versa.

Then, for example, when action 210 of method 200 has been performed for each sample of the two or more samples of the plurality of samples, i.e., for each $L_{k,i}$ with $i \in \{1,...,n\}$, and action 220 has been performed, method 200 might comprise determining for the location-related information LRI=k a name information which is considered to match best with the location-related information LRI=k at least partially based on the determined at last one relation representative $R_{k,l}$ with $l \in \{1,...,s\}$. For instance, the relation representative $R_{k,l}$ of the at least one relation representative $R_{k,l}$ with

$l \in \{1,...,s\}$ indicating the highest probability of the at least one relation representative $R_{k,l}$ may be selected and the corresponding name information $N_{k,l}$ of the selected relation representative $R_{k,l}$ may be determined to be the name information $N_{k,l}$ which probably matches best with the location-related information LRI=k. As an example, a relation representative $R_{k,l}$ of the at least one relation representative $R_{k,l}$ (with $l \in \{1,...,s\}$ might be determined based at least partially on at least one sample of the two or more samples $L_{k,i}$ (associated with a similar or same predefined location-related information LRI=k), wherein each sample of the at least one sample was used (or is used) for identifying the respective name information $N_{k,l}$ in of based on action 210 and/or based at least partially on at least one point of interest of the plurality of points of interest, wherein each point of interest of the at least one point of interest has been identified during one or more actions 210 for the location-related information LRI=k and the respective sample $L_{k,i}$ (used in respective action 210) and wherein the name information of each point of interest of the at least one point of interest corresponds to the name information $N_{k,l}$.

Thus, for instance, if in an action 210 a point of interest of the plurality of interest is identified for the respective sample $L_{k,i}$, e.g. since the location of the identified point of interest fulfills the distance criterion with respect to the location of the respective sample $L_{k,i}$ and, and therefore the name information $\underline{N}_{k,i,v}$ of the identified point of interest is an identified name information (of the at least one identified name information identified in respective action 210), the relation representative $R_{k,l}$ corresponding to this name information $N_{k,i}$ ($N_{k,l}$) $=\underline{N}_{k,i,v}$) might be determined at least partially based on the respective sample $L_{k,i}$ and/or the identified point of interest. As an example, if the same (or similar) name information $N_{k,l}$ occurs several times in one or more actions 210 with respect to different identified points of interest, at least one of the different identified points of interest and/or the respective sample $L_{k,i}$ of each of the at least one of the different identified points of interest might be used to determine the respective sample $L_{k,i}$.

As an example embodiment, a relation representative $R_{k,l}$ of the at least one relation representative $R_{k,l}$ (with $l \in \{1,...,s\}$) might be associated with at least one value of (i), (ii) and/or (iii):

i) A value $W_{k,l}$ being indicative of a distance measure (e.g. a geometric distance) determined based on an estimated distance indicator between the location of each point of interest of at least one identified point of interest (e.g. identified during one or more actions 210) and the respective location of the sample $L_{k,i}$ used for identifying the respective point of interest, wherein the name information of each identified point of interest of the at least one identified point of interest corresponds (e.g. is similar or the same) to the name information $N_{k,l}$. For instance, a value $W_{k,l}$ being indicative of a higher distance measure might decrease the probability indicated by the of the relation representative $R_{k,l}$ that the name information $N_{k,l}$ matches with the location-related information LRI=k since in this case the distance measure (e.g. in meters) determined based on an estimated distance indicator between the location of each point of interest of at least one identified point of interest (e.g. identified during one or more actions 210) and respective location of the sample $L_{k,i}$ used for identifying the respective point of interest is high and therefore might be considered to be sign of a certain unreliability. Contrary to this, e.g., a value $W_{k,l}$ being indicative of a lower distance measure might increase the probability indicated by the relation representative $R_{k,l}$ that the name information $N_{k,l}$ matches with the location-related information LRI=k since in this case the distance measure (e.g. in meters) determined based on an estimated distance indicator between the location of each point of interest of at least one identified point of interest (e.g. identified during one or more actions 210) and respective location of the sample $L_{k,i}$ used for identifying the respective point of interest is low.

As an example, the estimated distance indicator $di_{k,i,q}$ between the location of each point of interest of at least one identified point of interest (e.g. identified during one or more actions 210) and the respective location of the sample $L_{k,i}$ used for identifying the respective point of interest (wherein q may denote the respective q-th estimated distance between the location respective q-th point of interest of the at least one identified point of interest and the location of sample $L_{k,i}$), wherein the name information of each identified point of interest of the at least one identified point of interest corresponds (e.g. is similar or the same) to the name information $N_{k,l}$, may be calculated based on the location information of the respective point of interest and the location information of the respective sample $L_{k,l}$ (e.g., in this case the estimated distance indicator $di_{k,i,q}$ might correspond to an estimated distance $d_{k,i,q}$ between the location of the respective sample $L_{k,i}$ and the location of the respective q-th point of interest), and/or, in case the respective sample $L_{k,i}$ is a fingerprint (e.g. related to a radio network measurement) comprising a received signal strength (e.g. RSS) of a radio node (e.g. an access point), based on the received signal strength (and, if know, the transmit power of the radio node), wherein a lower RSS might indicate a higher estimated distance compared to the higher RSS which might indicate a lower estimated distance. For instance, each determined estimated distance indicator $di_{k,i,q}$ between the location of each point of interest of at least one identified point of interest (e.g. identified during one or more actions 210) and the respective location of the sample $L_{k,i}$ used for identifying the respective point of interest may be used for determining (with $q \in \{1,...,y\}$ and y indicating the number of the least one identified point of interest) might be used to determine the respective relation representative $R_{k,l}$.

ii) A value $C_{k,l}$ being indicative of number of point(s) of interest which have been considered with respect to the respective relation representative $R_{k,l}$ (e.g. for determining the respective relation representative $R_{k,l}$ - wherein said determining might comprise generating and/or updating the respective relation representative $R_{k,l}$). E.g., the value $C_{k,l}$ may represent a number of at least one identified point of interest (e.g. identified during one or more actions 210), wherein the name information of each identified point of interest of the at least one identified point of interest corresponds (e.g. is similar or the same) to the name information $N_{k,i}$, e.g. the used in i) for determine the value $W_{k,l}$. For instance, the at least one identified point of interest may be the at least one identified point of interest used for determining $W_{k,l}$ in i) or the at least one identified point of interest used for determining $F_{k,l}$ iii) below. For instance, a value $C_{k,l}$ being indicative of a higher number of point(s) of interest which have been considered with respect to the respective relation representative $R_{k,l}$ might increase the probability indicated by the of the relation representative $R_{k,l}$ that the name information $N_{k,l}$ matches with the location-related information LRI=k and a value $C_{k,l}$ being indicative of a lower number of point(s) of interest which have been considered with respect to the respective relation representative $R_{k,l}$ might decrease the probability indicated by the of the relation representative $R_{k,l}$ that the name information $N_{k,l}$ matches with the location-related information LRI=k. Therefore, e.g., the amoint of point(s) of interest which have been considered for determining the respective relation representative $R_{k,l}$ (which might be considered to be represented by value $C_{k,l}$) may be considered for evaluating the relation representative $R_{k,l}$.

Or, as another example, a value $C_{k,l}$ being indicative of the number of samples which have been considered with respect to the respective relation representative $R_{k,l}$ (e.g. for determining the respective relation representative $R_{k,l}$ - wherein said determining might comprise generating and/or updating the respective relation representative $R_{k,l}$). E.g., the value $C_{k,l}$ may represent a number of at least one sample (e.g. selected during one or more actions 210 or during one or more actions 420) thas was selected to identify at least one point of interest (e.g. in action 220 or action 430), wherein the name information of each identified point of interest of the at least one identified point of interest corresponds (e.g. is similar or the same) to the name information $N_{k,l}$, e.g. the used in i) for determining the value $W_{k,l}$. For instance, a value $C_{k,l}$ being indicative of a higher number of samples which have been considered with respect to the respective relation representative $R_{k,l}$ might increase the probability indicated by the of the relation representative $R_{k,l}$ that the name information $N_{k,l}$ matches with the location-related information LRI=k and a value $C_{k,l}$ being indicative of a lower number of samples which have been considered with respect to the respective relation representative $R_{k,l}$ might decrease the probability indicated by the of the relation representative $R_{k,l}$ that the name information $N_{k,l}$ matches with the location-related information LRI=k. Therefore, e.g., the amount of sample(s) which have been considered for determining the respective relation representative $R_{k,l}$ (which might be considered to be represented by value $C_{k,l}$) may be considered for evaluating the relation representative $R_{k,l}$. Thus, value $C_{k,l}$ might either be indicative of the number of point(s) of interest which have been considered with respect to the respective relation representative or be indicative of the number of samples(s) which have been considered with respect to the respective relation representative.

iii) A value $F_{k,l}$ being indicative of a similarity measure between the location-related information LRI=K and the name information of each point of interest of at least one identified point of interest at least one point of interest (e.g. identified during one or more actions 210) of the plurality of points of interest, wherein the at least one point of interest has been identified during one or more actions 210 for the location-related information LRI=k and wherein the name information of each point of interest of the at least one point of interest corresponds (e.g. is similar or the same) to the name information $N_{k,l}$. E.g., value $F_{k,l}$ might be considered to represent a value being indicative of a name information similarity

As an example, a similarity measure $s_{k,i,q}$ may be determined for each name information of each point of interest of at least one identified point of interest at least one point of interest (e.g. identified during one or more actions 210), wherein the q-th similarity measure $s_{k,i,q}$ is indicative of a similarity between the name-information of the q-th point of interest of the at least one identified point of interest and the location-related information LRI=k. For instance, if the location related information LRI=k is a location-related name information (e.g. as described above) the similarity measure $s_{k,i,q}$ might indicate the similarity between the name information of the q-th point of interest and the location-related name information LRI=k. As an example, this similarity measure $s_{k,i,q}$ might be determined based on a string comparison between a string of the location-related information and a string of the name information of the q-th point of interest. E.g., the closer the two strings are to each other (e.g. the more letters similar counts, or, e.g., the higher number of matching substrings is), the higher $s_{k,i,q}$ is. It may be assumed that $s_{k,i,q} \geq 0$ always holds.

For instance, value $F_{k,l}$ being indicative of a similarity measure between the location-related information LRI=k and the name information of each point of interest of at least one identified point of interest at least one point of interest may be determined based on each determined similarity measure $d_{k,i,q}$ (with $q \in \{1,...,y\}$ and y indicating the number of the least one identified point of interest). E.g., it may be assumed that $F_{k,l} \geq 0$ always holds.

Therefore, as an example, the relation representative $R_{k,l}$ may be determined based on value $W_{k,l}$ (e.g. without determining value $C_{k,l}$ according to ii) and determining value $F_{k,l}$ according to iii), or may be determined based on value $F_{k,l}$ (e.g. without determining value $W_{k,l}$ according to i) and determining value $C_{k,l}$ according to ii), or may be determined based on values $W_{k,l}$ and $F_{k,l}$ (e.g. without determining value $C_{k,l}$ according to ii), or may be determined based on values $W_{k,l}$ and $C_{k,l}$ (e.g. without determining value $F_{k,l}$ according to iii), or may be determined based on values $F_{k,l}$ and $C_{k,l}$ e.g. without determining value $W_{k,l}$ according to i), or may be determined based on values $W_{k,l}$, $F_{k,l}$ and $C_{k,l}$, or may be determined based on value $C_{k,l}$ according to ii) (e.g. without determining value $W_{k,l}$ according to i) and determining value $F_{k,l}$ according to iii), may be determined based on any other well-suited combination of two values of $W_{k,l}$, $F_{k,l}$ and $C_{k,l}$. For instance, determining the relation representative $R_{k,l}$ might be performed by means of one calculation based on the needed value(s) $W_{k,l}$, $F_{k,l}$ and/or $C_{k,l}$, or may be performed in an iterative way.

For instance, method 200 comprise updating the plurality of samples, wherein, in particular, said updating the plurality of samples comprises at least one of: including at least one new sample in the plurality of samples, wherein each sample of at least one new sample is associated with a location and with at least one location-related information, and wherein the at least one location-related information associated with a sample of the at least one new sample was obtained by at least one interface of a mobile device; removing at least one sample of the plurality of samples.

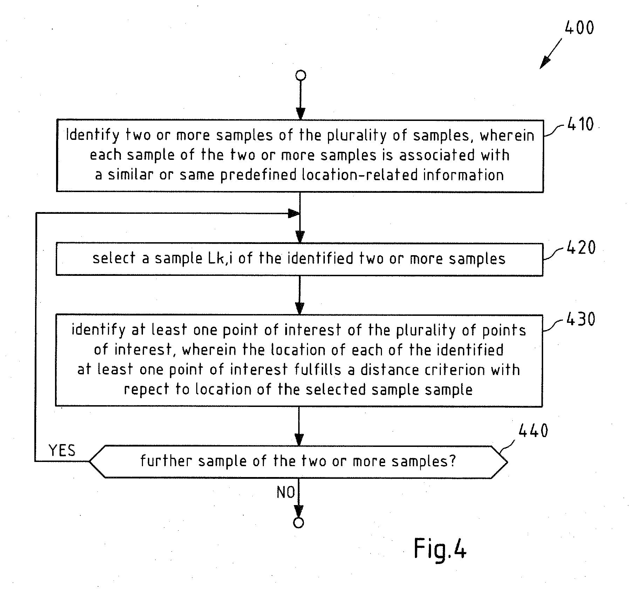

Furthermore, as an example, it has to be understood the some parts (or all parts) of action 220 might be performed during action 210 is performed, as will be exemplarily explained with respect to Fig. 4 and method 400.

Fig. 2a depicts an example embodiment of a method 200'. For instance, method 200' may be performed by apparatus 100.

Method 200' comprises identifying at least one set of two or more samples of the plurality of samples, wherein each sample of each set of the two or more samples are associated with a similar or same predefined location-related information (action 260).

As an example, there may be one or more different predefined location-related information $LRI_k$ with $k \in \{1,...,z\}$ and z being the number of different predefined location related information, wherein the one or more different predefined location-related information $LRI_k$ might be obtained from the samples of the plurality of samples. Then, for instance, for each location-related information $LRI_k$ a corresponding set of two or more samples of the plurality of samples is identified (e.g., if possible), wherein each sample of each set of the two or more samples are associated with the similar or same predefined location-related information $LRI_k$.

E.g., the respective k-th set of two or more samples of the identified at least one set of two or more samples of the plurality of samples may comprise two or more samples $L_{k,i}$ being associated with the respective location-related information $LRI_k$, wherein $i \in \{1,...,n^k\}$, wherein $n^k$ represents the number of the two or more samples of the respective k-th set of two or more samples and wherein $n^k \geq 2$ holds. Then, for instance, for each set of two or more sample identified set of two or more samples of the plurality of samples, method 200 and/or method 400 may be performed, wherein the respective set of two or more samples are the two or more samples used by method 200 and/or method 400 and/or by any other method described in this application.

Thus, for each set of two or more samples of the identified set of two or more samples of the plurality of samples, at least one relation representative $R_{k,l}$ can be determined (e.g. based on action 220 of method 200 and/or on method 400 and or any other method described in this application) wherein each of this at least one relation representative $R_{k,l}$ is associated with the predefined location-related information $LRI_k$ which is also associated with each sample of the respective set of two or more samples $L_{k,i}$., wherein $l \in \{1,...,s^k\}$ may hold. Therefore, for each set of two or more samples of the identified set of two or more samples of the plurality of samples, at least one name information $N_{k,l}$ with $N_{k,l}$ $l \in \{1,..., s^k\}$, wherein the at least one name information for a respective set of set of two or more samples $L_{k,l}$ might be denoted as list of identified at least one name information $N_{k,l}$ with $l \in \{1,..., s^k\}$,

As an example, method 200' might comprise identifying at least one location-related information, wherein each location-information related information of the identified at least one location-related information is associated with at least a predefined minimum number of samples of the plurality of samples, and might, for instance, comprise performing, for each identified location-related information, the method 200 or 400, wherein the respective identified location-related information represents the predefined location-related information, and, wherein, in particular, the predefined minimum number of samples of the plurality of samples is one of:

- 2;
- 5;
- 10;
- 15.

Thus, for each identified at least one location-related information the respective set of two or more sample can be identified in action 260.

Fig. 4 depicts an example embodiment of a method 400 which might be part of method 200, and, in particular including action 210, and, optionally, also including action 220 of method 200. For instance, method 400 may be performed by apparatus 100.

In action 410 two or more samples $L_{k,i}$ (with $i \in \{1,...,n\}$) of the plurality of samples 311, 312, 313, 321, 323, 332, 341, 342, 343 are identified, wherein each sample of the two or more samples is associated with a similar or same predefined location-related information LRI=k. For instance, action 410 may comprise selecting a first sample of the plurality of samples 311, 312, 313, 321, 323, 332, 341, 342, 343, determining the location-related information associated with the first sample to be the predefined location-related information LRI=k, and identifying one or more samples of the plurality of samples 311, 312, 313, 321, 323, 332, 341, 342, 343, wherein each sample of the identified one or more samples is associated with a location-related information being similar or same with the predefined location-related information LRI=k. Then, the first sample and the identified one or more samples represent the identified two or more samples $L_{k,i}$ (with $i \in \{1,...,n\}$) of the plurality of samples 311, 312, 313, 321, 323, 332, 341, 342, 343 are identified, wherein each sample of the two or more samples is associated with a similar or same predefined location-related information LRI=k.

Then, in action 420 a sample $L_{k,i}$ of the identified two or more samples $L_{k,i}$, is selected.

In action 430 at least one point of interest $POI_{k,i,p}$ ($p \in \{1,...,t^i\}$ of the plurality of points of interest is identified, wherein the location of each of the identified at least one point of interest $POI_{k,i,p}$ ($t \in \{1,..., t^i\}$ fulfills a distance criterion with respect to location of the selected sample $L_{k,i}$, e.g. as described above.

For each point of interest $POI_{k,i,p}$ of the identified at least one point of interest $POI_{k,i,p}$ ($p \in \{1,...,t^i\}$ one or more of the following may be performed:

i) It may be checked whether the name information $\underline{N}_{k,i,v}$ of the respective point of interest $POI_{k,i,p}$ is part of the list of identified at least one name information $N_{k,l}$ with $l \in \{1,...,s\}$, and if not, the name information $\underline{N}_{k,i,l}$ may be included in the list of identified at least one name information $N_{k,l}$ with $l \in \{1,...,s\}$ (and the value of s may be incremented by 1).

ii) Furthermore, for instance, a relation representative $R_{k,l}$ being indicative of a relation between the predefined location-related information LRI=k and the respective name information $N_{k,l}$ (wherein the respective name information $N_{k,l}$ corresponds to $\underline{N}_{k,i,v}$) of the respective q-th point of interest $POI_{k,i,p}$ may be determined. Determining a relation representative $R_{k,l}$ may comprise generating a new relation representative $R_{k,l}$, in particular for the case that no relation representative $R_{k,l}$ has been determined being indicative of a relation between the predefined location-related information LRI=k and the respective name information $N_{k,l}$ or, it may comprise updating the relation representative $R_{k,l}$, e.g. updating the relation representative $R_{k,l}$ at least on a previously on a previously determined relation representative $R_{k,l}$ if such a previously determined relation representative $R_{k,l}$ is available.

As an example, a relation representative $R_{k,l}$ of the at least one relation representative $R_{k,l}$ (with $l \in \{1,...,s\}$ might be associated with at least one value of $W_{k,l}$, $F_{k,l}$ and/or $C_{k,l}$ (as explained with the example above).

For instance, if the relation representative $R_{k,l}$ is associated with $W_{k,l}$, during or after action 430 the value $W_{k,l}$ may be determined. As an example, value $W_{k,l}$ may be calculated based on the estimated distance indicator $di_{k,i,q}$ between the location of the respective point of interest $POI_{k,i,p}$ and the location of the respective sample $L_{k,i}$. E.g., the distance indicator $di_{k,i,q}$ might be calculated as a function $di_{k,i,q}=f(d_{k,i,q})$ of the estimated distance $d_{k,i,q}$ between the location of the respective sample $L_{k,i}$ and the location of the respective q-th respective point of interest $POI_{k,i,p}$, wherein $f(d_{k,i,q})$ is an indecreasing function (i.e., $f(d_{k,i,q})$ increasing if the estimated distance $d_{k,i,q}$ gets smaller) and may correspond to $$f(d_{k,i,q}) = \min\left(\frac{1}{d_{k,i,q}^2}, 1\right).$$ Or, for instance, in case the respective sample $L_{k,i}$ is a fingerprint (e.g. related to a radio network measurement) comprising a received signal strength (e.g. $RSS_{k,i}$ as part of respective sample $L_{k,i}$) of a radio node (e.g. an access point), the distance indicator $di_{k,i,q}$ might be calculated as a function $di_{k,i,q}=f(RSS_{k,i})$, wherein $f(RSS_{k,i})$ is an increasing function (i.e., $f(RSS_{k,i})$ increases if the RSS is higher and decreases if the RSS is lower). If no value $W_{k,l}$ has been calculated so far (e.g. if no relation representative $R_{k,l}$ has been calculated so far), determining the relation representative $R_{k,l}$ might comprise determining $W_{k,l} = di_{k,i,q}$, and if previous value $W_{k,l}$ has been calculated so far, determining the relation representative $R_{k,l}$ might comprise updating the relation representative $R_{k,l}$ by updating $W_{k,l}$ based on the previous value of $W_{k,l}$ and the distance indicator $di_{k,i,q}$, e.g. by updating $W_{k,l}$ to be $W_{k,l} \leftarrow di_{k,i} + W_{k,l}$.

And/or, for instance, if the relation representative $R_{k,l}$ is associated with $F_{k,l}$, during or after action 430 the value $F_{k,l}$ may be determined. As an example, value $F_{k,l}$ may be calculated based on an estimated similarity measure

$s_{k,i,q}$ being indicative of a similarity between the name information of the respective q-th point of interest and the and the location-related information LRI=k (e.g. as explained above). Value $F_{k,l}$ might be considered to represent a value being indicative of a name information similarity. For instance, if the location related information LRI=k is a location-related name information (e.g. as described above) the similarity measure $s_{k,i,q}$ might indicate the similarity between the name information of the q-th point of interest and the location-related name information LRI=k. As an example, this similarity measure $s_{k,i,q}$ might be determined based on a string comparison between a string of the location-related information and a string of the name information of the q-th point of interest. E.g., the closer the two strings are to each other (e.g. the more letters similar counts, or, e.g., the higher number of matching substrings is), the higher $s_{k,i,q}$ is. It may be assumed that $s_{k,i,q} \geq 0$ always holds. If no value $F_{k,l}$ has been calculated so far (e.g. if no relation representative $R_{k,l}$ has been calculated so far), determining the relation representative $R_{k,l}$ might comprise determining $F_{k,l} = s_{k,i,q}$, and if previous value $F_{k,l}$ has been calculated so far, determining the relation representative $R_{k,l}$ might comprise updating the relation representative $R_{k,l}$ by updating $F_{k,l}$ based on the previous value of $F_{k,l}$ and the similarity measure $s_{k,i,q}$, e.g. by updating $F_{k,l}$ to be $F_{k,l} \leftarrow s_{k,i,q} + F_{k,l}$.

And/or, for instance, if the relation representative $R_{k,l}$ is associated with $C_{k,l}$, during or after action 430 the value $C_{k,l}$ may be determined. For instance, this determining of $C_{k,l}$ might comprise incrementing the value of $C_{k,l}$. E.g., if no value $C_{k,l}$ has been calculated so far (e.g. if no relation representative $R_{k,l}$ has been calculated so far), determining the relation representative $R_{k,l}$ might comprise determining $C_{k,l} = 1$ (which might be considered to increment value $C_{k,l} = 0$ by value 1), and if previous value $C_{k,l}$ has been calculated so far, determining the relation representative $R_{k,l}$ might comprise updating the relation representative $R_{k,l}$ by incrementing $C_{k,l}$ based on the previous value of $C_{k,l}$, e.g. by updating $C_{k,l}$ to be $C_{k,l} \leftarrow C_{k,l} + 1$.

Therefore, as an example, determining the relation representative $R_{k,l}$ might be performed for each identified q-th point of interest, wherein determining the relation representative might comprise updating the relation representative $R_{k,l}$ based on the previous relation representative $R_{k,l}$ (if available) and at least one of the determined values $W_{k,l}$, $F_{k,l}$ and $C_{k,l}$. This might be considered to be an iterative way of determining the relation representative $R_{k,l}$, since relation representative $R_{k,l}$ might be updated if there is a new identified point of interest being associated with the respective name information $N_{k,l}$ (e.g. identified during action 430 of Fig. 4).

Thus, for instance, said determining, for each identified name information $N_{k,l}$ with $l \in \{1,...,s\}$ being indicative of a relation between the predefined location-related information LRI=k and the respective name information $N_{k,l}$ of the identified at least one name information $N_{k,l}$ in action 220 might comprise determining a relation representative $R_{k,l}$ at least on a previously determined relation representative $R_{k,l}$ being indicative of a relation between the predefined location-related information and the name information if such a previously determined relation representative $R_{k,l}$ is available.

In action 440 it may be checked whether there is a further sample of the two or more samples and if yes, method 400 may jump to action 420 in order to select this further sample of the two or more samples. If all samples of the two or more samples have been selected and action 430 has been performed for each of the two or more samples, the check in action 430 may yield in the result that there is not further sample of the two or more samples and method 240 may proceed at reference sign 450.

Thus, relation representative(s) $R_{k,l}$ $l \in \{1,...,s\}$ may be determined (which might include updating or generating a new relation representative $R_{k,l}$) in an iterative process, e.g. during a crowd-sourcing process.

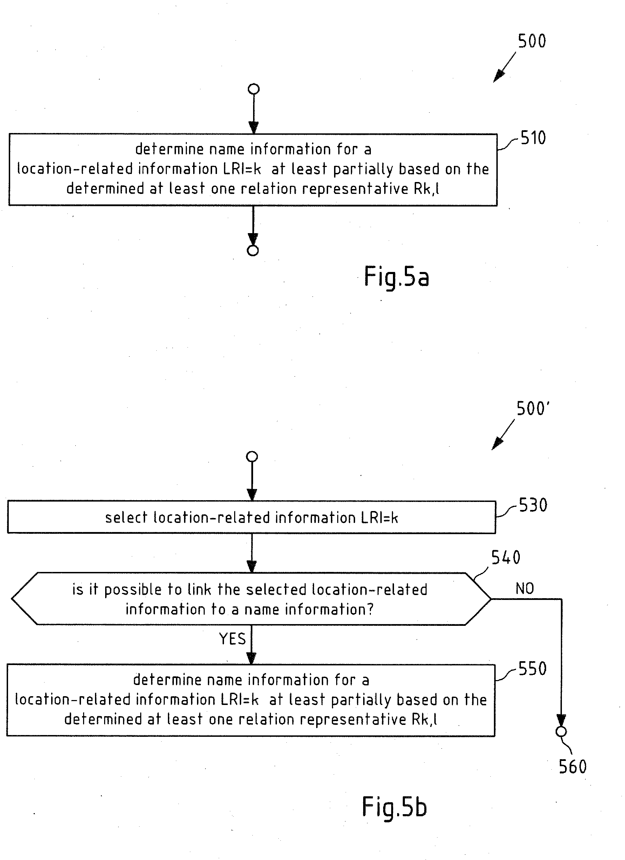

Fig. 5a depicts an example embodiment of a method 500 according to the present invention. For instance, method 500 may be performed by apparatus 100.

According to the example embodiment of method 500 for a location-related information LRI=k a name information is determined at least partially based on the determined at least one relation representative $R_{k,l}$ with $l \in \{l,...,s\}$ in action 510. Thus, it may be assumed that action 510 is performed after at least a part of method 200 and/or a least a part of method 400 has been performed and the at least one respective relation representative $R_{k,l}$ is available.

For instance, the relation representative $R_{k,l}$ of the at least one relation representative $R_{k,l}$ with $l \in \{1,...,s\}$ indicating the highest probability of the at least one relation representative $R_{k,l}$ may be selected and the corresponding name information $N_{k,l}$ of the selected relation representative $R_{k,l}$ may be determined to be the name information $N_{k,l}$ which probably matches best with the location-related information LRI=k in action 510. E.g., one or more relation representatives $R_{k,l}$ of the at least one relation representative $R_{k,l}$ with $l \in \{1,...,s\}$ a probability value $p_{k,l}$ being indicative of an estimation of a relation between the selected location-related information LRI=k and the name information associated with the relation representative $R_{k,l}$ may be determined.

As an example, if the relation representative $R_{k,l}$ is associated with value $W_{k,l}$, action 510 might comprise selecting the relation representative $R_{k,l}$ from the at least one relation representative $R_{k,l}$ (with $l \in \{1,...,s\}$) being associated with the highest distance measure $W_{k,l}$ compared to the remaining relation representative(s) $R_{k,l}$ of the at least one relation representative $R_{k,l}$ (if there is a remaining relation representative or are more remaining relation representatives)). For instance, the l-th relation representative $R_{k,l}$ (which might correspond to $p_{k,l}$) of the at least one relation representative $R_{k,l}$ with $l \in \{1,...,s\}$ might be proportional to $W_{k,l}$, i.e., $R_{k,l} \sim W_{k,l}$ may hold, wherein, e.g., the l-th relation representative $R_{k,l}$ (which might correspond to $p_{k,l}$) of at least one relation representative $R_{k,l}$ with $l \in \{1,...,s\}$ might be a weighted relation representative $R_{k,l}$, e.g. $R_{k,l} = \frac{W_{k,l}}{\sum_{x=1}^{s} W_{k,x}}$ .

As an example, if the relation representative $R_{k,l}$ is associated with value $W_{k,l}$ and with value $C_{k,l}$, in action 510 only relation representative(s) $R_{k,l}$ are considered whose respective value $C_{k,l}$ exceeds a predefined number threshold (e.g. denoted as $C_{thresh}$), (e.g. $C_{thresh}$ = 3, or 5, or 8, or 10, or 15 or any other well-suited number threshold) and among this/these considered relation representative(s) $R_{k,l}$ the relation representative $R_{k,l}$ is selected being associated with the highest distance measure $W_{k,l}$ compared to the remaining considered relation representative(s) $R_{k,l}$. For instance, the l-th relation representative $R_{k,l}$ of s at least one relation representative $R_{k,l}$ with $l \in \{1,...,s\}$ might be a weighted relation representative $R_{k,l}$, e.g.

$$R_{k,l} = \begin{cases} \dfrac{W_{k,l}}{\sum_{x=1}^{s} W_{k,x}} & , C_{k,l} > C_{thresh} \\ 0 & , C_{k,l} \leq C_{thresh} \end{cases} \qquad (1)$$

Furthermore, for instance, in the sum $\sum_{x=1}^{s} W_{k,x}$ of the above equation only those $R_{k,x}$ might be considered which are associated with a value $C_{k,l}$ exceeding the predefined number threshold $C_{thresh}$, or, e.g., the sum $\sum_{x=1}^{s} W_{k,x}$ may be omitted (no weighting).

As an example, if the relation representative $R_{k,l}$ is associated with value $W_{k,l}$ and with value $F_{k,l}$, the l-th relation representative $R_{k,l}$ (which might correspond to $p_{k,l}$) of s at least one relation representative $R_{k,l}$ with $l \in \{1,...,s\}$ might be a combination of $W_{k,l}$ and $F_{k,l}$, and, e.g. the l-th relation representative $R_{k,l}$ may be proportional to $W_{k,l}$ and $F_{k,l}$, e.g. $R_{k,l} \sim W_{k,l}$ and $R_{k,l} \sim F_{k,l}$ may hold, i.e., $R_{k,l}$ might be proportional to the product of $W_{k,l}$ and $F_{k,l}$, i.e., $R_{k,l} \sim W_{k,l} \cdot F_{k,l}$. E.g., it is assumed that $F_{k,l} \geq 0$ always holds. According to this example the cases may be handled where the similarity measure $F_{k,l}$ (e.g. string comparison between the location-related name information LRI=k and the respective name information $N_{k,l}$) provides a clear result but there is little data in the crowd-sourcing database (e.g. comprising the plurality of samples).

As an example, if the relation representative $R_{k,l}$ is associated with value $W_{k,l}$, with value $F_{k,l}$ and with value $C_{k,l}$, only relation representative(s) $R_{k,l}$ are considered whose respective value $C_{k,l}$ exceeds a predefined number threshold (e.g. denoted as $C_{thresh}$), (e.g. $C_{thresh}$ = 3, or 5, or 8, or 10, or 15 or any other well-suited number threshold) and among this/these considered relation representative(s) $R_{k,l}$ (which might correspond to $p_{k,l}$) the relation representative $R_{k,l}$ is selected being associated with the highest combination of distance measure $W_{k,l}$ and similarity measure $F_{k,l}$ compared to the remaining considered relation representative(s) $R_{k,l}$. For instance, the l-th relation representative $R_{k,l}$ of s at least one relation representative $R_{k,l}$ with $l \in \{1,...,s\}$ might be a weighted relation representative $R_{k,l}$, e.g.

$$R_{k,l} = \begin{cases} \dfrac{W_{k,l} \cdot F_{k,l}}{\sum_{x=1}^{s} W_{k,x} \cdot F_{k,x}} & , C_{k,l} > C_{thresh} \\ 0 & , C_{k,l} \leq C_{thresh} \end{cases} \qquad (2)$$

Furthermore, for instance, in the sum $\sum_{x=1}^{s} W_{k,x} F_{k,x}$ of the above equation only those $W_{k,x}$, $F_{k,x}$ might be considered which are associated with a value $C_{k,l}$ exceeding the predefined number threshold $C_{thresh}$, or, e.g., the sum $\sum_{x=1}^{s} W_{k,x} F_{k,x}$ may be omitted (no weighting).

Therefore, as an example, for each of the above explained examples the relation representatives $R_{k,l}$ with $l \in \{1,...,s\}$ might be determined and the relation representative $R_{k,l}$ of the at least one relation representative $R_{k,l}$ with

$l \in \{1,...,s\}$ indicating the highest probability of the at least one relation representative $R_{k,l}$ may be selected and the corresponding name information $N_{k,l}$ of the selected relation representative $R_{k,l}$ may be determined to be the name information $N_{k,l}$ which probably matches best with the location-related information LRI=k in action 510.

For instance, method 500 might include selecting a location-related information of a sample of the plurality of samples, wherein the selected location-related information $LRI_k$ is associated with at least one relation representative relation representative $R_{k,l}$, wherein each relation representative of the at least one relation representative is indicative of a relation between the selected location-related information and a name information, and determining, if possible, which name information can be linked with the selected location-related information at least partially based on the at least one relation representative associated with the selected location-relation information (action 510).

For instance, said determining, if possible, which point of interest can be linked with selected location-related information at least partially based on the at least one relation representative associated with the selected location-relation information, comprises: (i) determining a relation representative of the at least one relation representative which fulfills a matching criterion, and (ii) linking the point of interest associated with the determined relation representative to the selected location-related information. E.g. the matching criterion is fulfilled for the relation representative of the at least one relation representative indicating the highest probability of a match between the selected location-related information and the respective name information, e.g. as explained above.

As an example, for each relation representative $R_{k,l}$ is of the at least one relation representative $R_{k,l}$ the following may be performed:

- determining a probability value ($p_{k,l}$) being indicative of an estimation of a relation between the selected location-related information LRI=k and the name information $N_{k,l}$ point at least partially based on the respective relation representative (e.g. as explained above, wherein the probability value might be relation representative $R_{k,l}$);
- determining a relation representative of the at least one relation representative which fulfills a matching criterion by determining the relation representative for which the highest probability value relation representative is determined,
- wherein, in particular:
- the highest probability value must exceed a predefined probability threshold, and if the highest probability value does not exceed the predefined probability threshold, not determining a relation representative and not linking the relation representative to the selected location-related information.

As an example, each relation representative of the at least one relation representative comprises (or represents) a probability value (e.g. above mentioned probability value $p_{k,l}$- being indicative of an estimation of a relation between the selected location-related information LRI=k and the name information $N_{k,l}$ point at least partially based on the respective relation representative) and a counter $C_{k,l}$ of the respective relation representative being indicative of the number of samples counts used for determining the respective relation representative, and wherein the matching criterion is fulfilled for a relation representative if:

- the counter of the respective relation representative exceeds a predefined counter threshold (e.g. number threshold $C_{thresh}$), and
- the probability value of the respective relation representative indicates the highest quality of relation of each weight of one or more relation representative of the at least one relation representative, wherein the counter of each relation representative of the one or more relation representative exceeds the predefined counter threshold (e.g. as explained with respect to above mentioned equations (1) and (2) - wherein $R_{k,l}$ may be considered to represent the probability value).

And, as an example, each relation representative of the at least one relation representative further comprises a similarity measure ($F_{k,l}$), and wherein said determining a probability value being indicative of an estimation of a relation between the selected location-related information and the point of interest associated with the relation representative is further at least partially based on the similarity measure of the respective relation representative, e.g. by combination of distance measure $W_{k,l}$ and similarity measure $F_{k,l}$ to a probability value probability value $p_{k,l}$ e.g. as described above, and, e.g. according to equation (2) - wherein $R_{k,l}$ may be considered to represent the probability value.

Fig. 5b depicts an example embodiment of a method 500' according to the present invention. For instance, method 500' may be performed by apparatus 100.

In action 530 a location-related information LRI=k is selected.

Then, it is checked in action 540 whether is it possible to link the selected location-related information LRI=k to a name information. For instance, in action 540 it may be checked whether at least one relation representative $R_{k,l}$ of the at least one relation representative $R_{k,l}$ with $l \in \{1,...,s\}$ indicates a sufficient probability of a name matching.

E.g., this action 540 might comprise checking whether at least one relation representative $R_{k,l}$ of the at least one relation representative $R_{k,l}$ with $l \in \{1,...,s\}$ exceeds a predefined reliability threshold (e.g. denoted as $R_{thresh}$) and if

there is at least one relation representative $R_{k,l}$ exceeding the predefined reliability threshold, the checking in action 540 may yield in a positive result and method 500' may proceed with action 550, otherwise method 500' might determine that it is not possible to the selected location-related information LRI=k to a name information and may proceed with reference sign 560.

And/or, for instance, a relation representative $R_{k,l}$ of the at least one relation representative $R_{k,l}$ with $l \in \{1,...,s\}$ might be considered not to indicate a sufficient probability of a name matching if the following holds:

i) If all samples being associated with the respective relation representative $R_{k,l}$, i.e., all samples used for determining the relation representative $R_{k,l}$ (e.g. during method 200 and/or during method 400), are associated with locations being within a predefined geographic area, e.g. within a predefined radius. For instance, this predefined geographic area might be a small area having a size less than $0,5km^2$, or less than $0,3km^2$, or less than $0,1\ km^2$ or any other well-suited area and might have a rectangular shape (e.g. squared) or circular shape, wherein in case of circular shape the predefined area might be defined by predefined radius, e.g. 500m, or 200m, or 100m, or any other well-suited radius. Thus, if the location of each sample used for determining the respective relation representative $R_{k,l}$ with $l \in \{1,...,s\}$ is within the predefined geographic area, the reliability of the respective relation representative $R_{k,l}$ with $l \in \{1,...,s\}$ might be considered to be weak and thus it may be considered that this relation representative $R_{k,l}$ does not indicate a sufficient probability of a name matching (for instance, this relation representative $R_{k,l}$ might be indicated to unreliably by means of setting of flag).

For instance, the highest and lowest latitudes and longitudes among all samples being associated with a respective relation representative $R_k$ may be stored for each respective relation representative $R_{k,l}$, and thus, the highest and lowest latitudes and longitudes associated with a respective relation representative $R_k$ might be used to check whether the location of each sample used for determining the respective relation representative $R_{k,l}$ with $l \in \{1,...,s\}$ is within the predefined geographic area.

Therefore, for instance, if each relation representative $R_{k,l}$ of the at least one relation representative $R_{k,l}$ with $l \in \{1,...,s\}$ is considered not to indicate a sufficient probability of a name matching (e.g. are marked the above mentioned flag), the checking in action 540 may yield a negative result.

If the checking in action 540 yields a positive result, method 500 may proceed with action 550, wherein in action 550 for the selected location-related information LRI=k a name information is determined at least partially based on the determined at least one relation representative $R_{k,l}$ with $l \in \{1,...,s\}$. Thus, action 550 may correspond to action 510. Furthermore, as an example, only those relation representative(s) $R_{k,l}$ of the least one relation representative $R_{k,l}$ with $l \in \{1,...,s\}$ may be considered which are not considered to not indicate a sufficient probability of a name matching (e.g. those relation representative(s) $R_{k,l}$ which are not marked by the above-mentioned flag).

If the checking in action 540 yields a negative result, method 500 may proceed at reference sign 560 and might not link a name information with the selected location-related information LRI=k

As an example, it is determined not to be possible to link a point of interest information with the selected location-related information (in action 540) if at least one of the following holds:

- the counter of each relation representative $R_{k,l}$ with $l \in \{1,...,s\}$ of the at least one relation representative is not higher than a predefined counter threshold (e.g. number threshold $C_{thresh}$); and
- the maximum distance between the location of two samples (or all samples) of the two or more samples associated with the selected location-related information LRI=k is below a predefined second distance threshold.

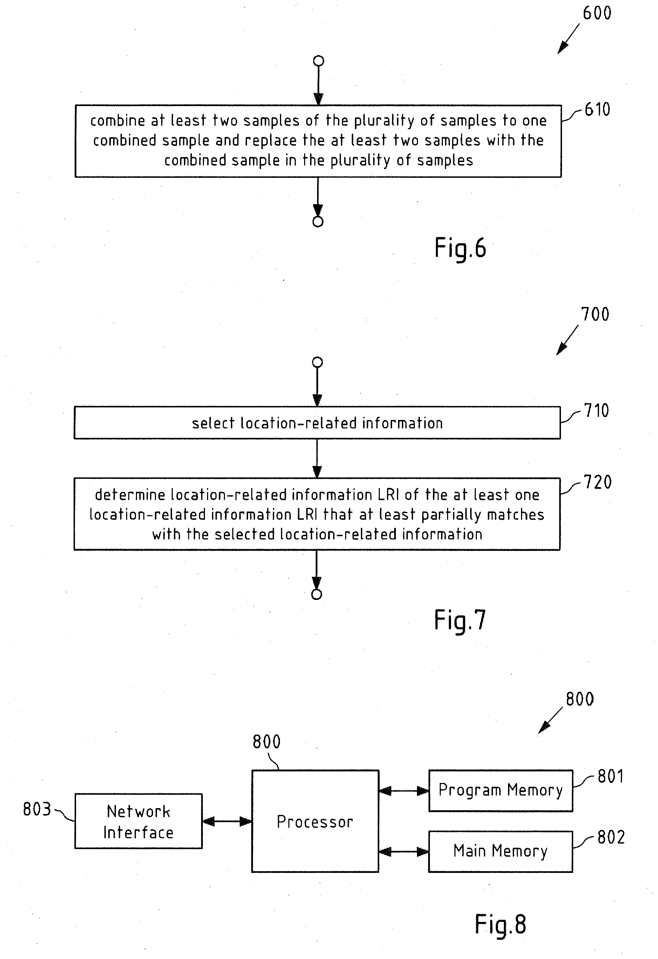

Fig. 6 depicts an example embodiment of a method 600 according to the present invention. For instance, method 600 may be performed by apparatus 100.

In action 610 apparatus 100 combines at least two samples of the plurality of samples to one combined sample and replaces the at least two samples with the combined sample in the plurality of samples. For instance, this may performed for at least two samples of the plurality of samples which are associated with correlated information, e.g. correlated location (e.g., a correlated location may be a locations that are within a predefined area) and wherein each of the at least two samples is associated with a same name information. For instance, this predefined area might be a small area having a size less than $0,3km^2$, or less than $0,1\ km^2$ or any other well-suited area and might have a rectangular shape (e.g. squared) or circular shape, wherein in case of circular shape the predefined area might be defined by predefined radius, e.g. 100m, or 50m, or 30m, or any other well-suited radius. Therefore, of the locations of the at least two samples are close to each other (e.g. within the predefined area) and the name information of each sample of the at least two samples are the same, it might be assumed to these at least two samples might be associated with the same point of interest (e.g. the same radio node of an enterprise or a shop) at the same location. Thus, these at least two samples can be combined in action 210 to a combined sample, wherein the location of the combined sample might be determined based on the locations of the at least two samples used for combining or may be a known location which is known to be related with the point of interest (e.g. the radio node). Furthermore, the name information of the combined sample might be the name information of the at least two samples used for combining.

Then, the at least two samples can be replaced with the combined sample in the plurality of samples, wherein the combined sample might be associated with larger weight when being used for determining a relation representative $R_{k,l}$. Thus, the plurality of samples used for each method (e.g. method 200 or 400 or 500 or 500' ) might comprise at least one combined sample.

Action 610 might be performed for a plurality of sets of at least two samples of the plurality of samples, wherein each set of at least two samples are associated with correlated information, e.g. correlated location (e.g., a correlated location may be a locations that are within a predefined area) and wherein each of the at least two samples is associated with a same name information.

In this way, the effect of differences in data collection rates may be eliminated (if individual radio samples are used, the venues where the amount of data is high will get more weight in the matching decision). That is, if the locations and name information's (e.g. SSIDs) of some radio nodes are known or can be estimated using some measurements, this information can also be used as training samples in a machine learning algorithm. These samples might be given more weight than the individual radio network measurement samples.

Fig. 7 depicts an example embodiment of a method 700 according to the present invention. For instance, method 700 may be performed by apparatus 100.

In action 710 a location-related information is selected. This selected location-related information does not necessarily be identical to one of the at least one location related information $LRI_k$ with $k \in \{1,...,z\}$ and z being the number of different predefined location related information (e.g. identified by method 200').

In action 720 a location-related information LRI of the at least one location related information $LRI_k$ with $k \in \{1,...,z\}$ is determined that at least partially matches with the selected location-related information (or which matches best with the selected location-related information).

As an example, method 700 might be considered to comprise selecting a location-related information (action 710) and determining a location-related information being associated with an identified set of two or more samples that at least partially matches with the selected location-related information (action 720).

E.g., if there is a one-to-one match between the selected location-related information (might be denoted as LRI_S) and one of the at least one location related information $LRI_k$ with $k \in \{1,...,z,\}$ this location related information $LRI_k$ is determined. Or, e.g., otherwise the location-related information of the at least one location related information $LRI_k$ with $k \in \{1,...,z\}$ might be determined in action 720 which matches best with the selected location-related information, e.g. based on performing string comparison between the selected location-related information (which might be a location-related name information) and location-related name information of the respective at least one location related information $LRI_k$ with $k \in \{1,...,z,\}$. For instance, a similarity measure $sl_k$ with $k \in \{1,...,z,\}$ might be determined for each pair of LRI_S and $LRI_k$, wherein the similarity measure $sl_k$ is indicative of the similarity between the name information of the k-th location related information $LRI_k$ and the selected location-related name information LRI_S, As an example, this similarity measure $sl_k$ might be determined based on a string comparison between a string of the location-related information $LRI_k$ and a string of the selected location related information LRI_S.

Then, as an example, the location-related information determined in action 720 might be used, e.g., by method 500, in order to determine a name information for the determined location-related information LRI=k at least partially based on the determined at least one relation representative $R_{k,l}$.

Or, as another example, for each location related information $LRI_k$ at least one location related information $LRI_k$ with $k \in \{1,...,z\}$ the relation representative $R_{k,l}$ indicating the highest probability might be identified and might be combined (e.g. multiplied) with the respective similarity measure $sl_k$ in order to obtain a probability indicator $pi_k$ being indicative of an overall probability that for the k-th location related information $LRI_k$ the name information of the k-th location related information $LRI_k$ matches with the selected location-related (e.g. name) information LRI_S and that the name information of the relation representative $R_{k,l}$ (indicating the highest probability of a match between the name information indicated by this relation representative $R_{k,l}$ and the k-th location related information $LRI_k$) matches with the k-th location related information $LRI_k$. Then, the probability indicator $pi_k$ with $k \in \{1,...,z\}$ can be determined and the corresponding relation representative $R_{k,l}$ indicates the name information $N_{k,l}$ which probably matches best with the selected location-related (e.g. name) information LRI_S.

Fig. 8 is a block diagram of an exemplary embodiment of an apparatus 8, which might be a server 8 according to the invention, which may (for instance) represent server 370 depicted in Fig. 3. Furthermore, as an example embodiment, server 800 may be considered to represent a cloud component. Furthermore, as an example, server 800 might comprise apparatus 100).

Server 8 comprises a processor 801. Processor 800 may represent a single processor or two or more processors, which are for instance at least partially coupled, for instance via a bus. Processor 800 executes a computer program code stored (e.g. computer program code causing server 8 to perform any one embodiment of the disclosed method (e.g. the steps of any one embodiment of the disclosed method) or a part thereof (e.g. at least some steps of any one embodiment of the disclosed method) (in particular method 200, and/or method 400, and/or method 500 and/or method 500' and/or method 600 and/or method 700 as described with respect to of Figs. 2a, 2b, 4, 5a, 5b, 6 and 7), in program memory 801, and interfaces with a main memory 802.

Program memory 801 may also contain an operating system for processor 800 and, for instance, radio map information representing a radio map of a predetermined environment system (e.g. system 300). Some or all of memories 801 and 802 may also be included into processor 800. One of or both of memories 801 and 802 may be fixedly connected to processor 800 or at least partially removable from processor 800, for example in the form of a memory card or stick.

Processor 800 further controls a network interface 803 which is configured to communicate via a communication network (e.g. the internet).

The components 801 to 803 of server 8 may for example be connected with processor 800 by means of one or more serial and/or parallel busses.

It is to be understood that server 8 may comprise various other components like a user interface for receiving user input.

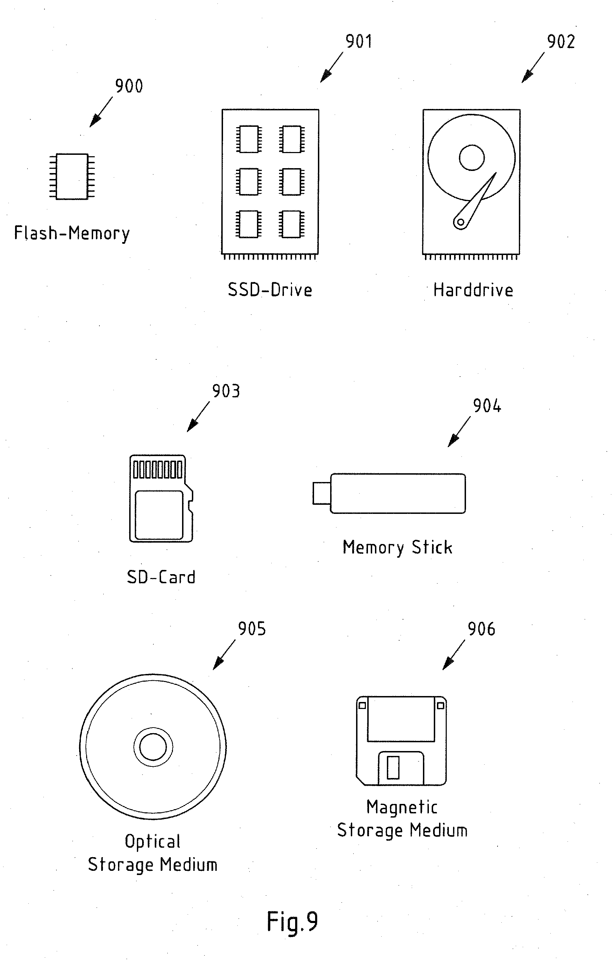

Fig. 9 is a schematic illustration of examples of tangible and non-transitory computer-readable storage media according to the present invention that may for instance be used to implement memory 701 of Fig. 7, and memory 801 of Fig. 8. To this end, Fig. 9 displays a flash memory 900, which may for instance be soldered or bonded to a printed circuit board, a solid-state drive 901 comprising a plurality of memory chips (e.g. Flash memory chips), a magnetic hard drive 902, a Secure Digital (SD) card 903, a Universal Serial Bus (USB) memory stick 904, an optical storage medium 905 (such as for instance a CD-ROM or DVD) and a magnetic storage medium 906.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:

(a) hardware-only circuit implementations (such as implementations in only analog and/or digital circuitry)
(b) combinations of circuits and software (and/or firmware), such as: (1) to a combination of processor(s) or (2) to sections of processor(s)/ software (including digital signal processor(s)), software, and memory(ies) that work together to cause an apparatus, such as a mobile phone, to perform various functions) and
(c) to circuits, such as a microprocessor(s) or a section of a microprocessor(s), that require software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processor 800 of Fig. 8, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof" or "at least one of A, B and C" may be understood to be not exhaustive and to include at least the following: (1) A, or (2) B, or (3) C, or (4) A and B, or (5) A and C, or (6) B and C, or (7) A and B and C.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

**Claims**

1. A method comprising:

   - performing (102) for each sample of two or more samples of a plurality of samples, wherein each sample of the plurality of samples is associated with a location and with at least one location-related information, and wherein the at least one location-related information associated with a sample of the plurality of samples was obtained by at least one interface of a mobile device, and wherein each sample of the two or more samples is associated with a same predefined location-related information:
   - identifying (210) at least one name information of at least one point of interest of a plurality of points of interest at least partially based on the location of one or more samples of the two or more samples and on a location being associated with a respective point of interest of the at least one point of interest, wherein each point of interest of the plurality of points of interest is associated with a location and with a name information;
   wherein the method further comprises:

   - determining (220), for each identified name information, a relation representative being indicative of a relation between the predefined location-related information and the name information, wherein the relation representative being indicative of a relation between the predefined location-related information and the respective point of interest comprises or is associated with a value $C_{k,l}$ either being indicative of the number of point(s) of interest which have been considered with respect to the respective relation representative or being indicative of the number of samples(s) which have been considered with respect to the respective relation representative.

2. The method according to claim 1, wherein said determining, for each identified name information, a relation representative being indicative of a relation between the predefined location-related information and the name information, is performed at least partially based on at least one sample of the two or more samples associated with a same predefined location-related information and at least partially based on at least one point of interest of the plurality of points of interest, in particular by using a classification algorithm.

3. The method according to claim 1 or 2, wherein this relation representative being indicative of a relation between the predefined location-related information and the name information is at least partially determined on a previously determined relation representative being indicative of a relation between the predefined location-related information and the name information if such a previously determined relation representative is available.

4. The method according to any of claims 1 to 3, wherein said identifying at least one name information of at least one point of interest of a plurality of points of interest comprises selecting the at least one point of interest of a plurality of points of interest such that for each selected point of interest the location associated with the respective selected point of interest fulfils a distance criterion with respect to the location associated with the respective sample of the two or more samples.

5. The method according to claim 4, wherein the distance criterion is fulfilled if the distance between the location associated with the respective selected point of interest and the location associated with the respective sample of the two or more samples is less than a predefined distance threshold.

6. The method according to any of claims 1 to 5, wherein the relation representative being indicative of a relation between the predefined location-related information and the respective point of interest is at least partially indicative of a probability that the predefined location-related information matches with the name information.

7. The method according to any of the preceding claims, wherein each point of interest of at least one point of interest of the plurality of points of interests is associated with a name information, wherein the name information an identifier of the point of interest, wherein, in particular, the identifier is one of:

   - an identifier of an access point, in particular a SSID or an URL;
   - an identifier of a business entity, in particular a name of the business entity;
   - an identifier of a street, in particular a name of a street;
   - an identifier of a building, in particular a name of a building.

8. The method according to claim 7, wherein the location-related information is represented at least partially by a string.

9. The method according to any of the preceding claims, wherein the at least one location-related information associated with a sample of the plurality of samples comprises at least one location-related string being obtained based on the least one interface of the mobile device when obtaining the respective sample, wherein, in particular, a location-related string of the at least one location-related string comprises information regarding the environment of the mobile device when obtaining the respective sample.

10. The method according to any of the preceding claims, wherein the at least one location-related information associated with a sample of the plurality of samples comprises at least one location-related identifier, wherein, in particular, the at least one location-related identifier is at least one of:

    - an identifier of an access point, in particular a SSID or an URL;
    - at least one photo;
    - a name extracted from at least one photo, in particular at least one photo captured at the location associated with the respective sample;
    - a name extracted from at least one video, in particular at least one video captured at the location associated with the respective sample;
    - a name extracted from at least one audio sample, in particular at least one audio sample captured at the location associated with the respective sample.

11. The method according to any of the preceding claims, wherein the at least one location-related information associated with a sample of the plurality of samples was obtained by at least one interface of a mobile device, and wherein the at least one interface of the mobile device is at least one of:

    - a radio interface;
    - a camera;
    - a near-field communication interface;
    - an audio interface, in particular a microphone.

12. The method according to any of the preceding claims, wherein the location associated with a sample of the plurality of samples is representative of a location estimate where the mobile device captured the sample, and wherein, in particular, the location estimate is determined based on at least one of:

    - GNSS positioning of the mobile device;
    - radio network positioning of the mobile device,
    - sensor-based positioning of the mobile device.

13. The method according to claim 12, wherein the location estimate comprises location coordinates being indicative of the position where the mobile device captured the sample, and, wherein, in particular, the location estimate further comprises altitude information and/or a floor index of the location where the mobile device captured the sample.

14. The method according to any of the preceding claims, wherein the location of point of interest of the plurality of points of interest is associated with a location comprises location coordinate being indicative of the point of interest, wherein, in particular, the location comprises, altitude information and/or a floor index of the point of interest.

15. The method according to any of claims 1 to 14, wherein the relation representative being indicative of a relation between the predefined location-related information and the respective point of interest comprises or is associated with at least one of:

    - a value $W_{k,l}$ being indicative of a distance measure determined based on an estimated distance indicator between the location of each point of interest of at least one identified point of interest used for determining the respective relation representative and the respective location of the sample $L_{k,i}$ used for identifying the respective point of interest, or
    - a value $F_{k,l}$ representing a value being indicative of a name information similarity.

16. The method according to any of the preceding claims, comprising updating the plurality of samples, wherein, in particular, said updating the plurality of samples comprises at least one of:

    - including at least one new sample in the plurality of samples, wherein each sample of at least one new sample is associated with a location and with at least one location-related information, and wherein the at least one location-related information associated with a sample of the at least one new sample was obtained by at least one interface of a mobile device;
- removing at least one sample of the plurality of samples.

17. The method according to any of the preceding claims, comprising a machine learning algorithm for said determining, for each identified point of interest, a relation representative being indicative of a relation between the predefined location-related information and the respective point of interest, wherein, in particular, said machine learning algorithm is one of:

   - a Bayesian method,
   - a neural network,
   - a support vector machine,
   - a nearest neighbor algorithm,
   - a decision tree.

18. The method according to any of the preceding claims, comprising identifying at least one location-related information, wherein each location-information related information of the identified at least one location-related information is associated with at least a predefined minimum number of samples of the plurality of samples, and performing, for each identified location-related information, the method according to any of the preceding claims, wherein the respective identified location-related information represents the predefined location-related information, and, wherein, in particular, the predefined minimum number of samples of the plurality of samples is one of:

   - 2;
   - 5;
   - 10;
   - 15.

19. The method according to any of the preceding claims, comprising:

   - selecting a location-related information of a sample of the plurality of samples, wherein the selected location-related information is associated with at least one relation representative, wherein each relation representative of the at least one relation representative is indicative of a relation between the selected location-related information and a name information, and
   - determining, if possible, which name information can be linked with the selected location-related information at least partially based on the at least one relation representative associated with the selected location-relation information.

20. The method according to claim 19, wherein said determining, if possible, which point of interest can be linked with selected location-related information at least partially based on the at least one relation representative associated with the selected location-related information, comprises:

   - determining a relation representative of the at least one relation representative which fulfills a matching criterion, and
   - linking the point of interest associated with the determined relation representative to the selected location-related information.

21. The method according to claim 20, wherein each relation representative of the at least one relation representative comprises a weight and a counter of the respective relation representative being indicative of the number of samples counts used for determining the respective relation representative, and wherein the matching criterion is fulfilled for a relation representative if:

   - the counter of the respective relation representative exceeds a predefined counter threshold; and
   - the weight of the respective relation representative indicates the highest quality of relation of each weight of one or more relation representative of the at least one relation representative, wherein the counter of each relation representative of the one or more relation representative exceeds the predefined counter threshold.

22. The method according to any of claims 19 to 21, comprising, for each relation representative of the at least one relation representative:

- determining a probability value being indicative of an estimation of a relation between the selected location-related information and the point of interest associated with the relation representative at least partially based on the respective relation representative;
wherein the method further comprises
- determining a relation representative of the at least one relation representative which fulfills a matching criterion by determining the relation representative for which the highest probability value relation representative is determined,
- wherein, in particular:

- the highest probability value must exceed a predefined probability threshold, and if the highest probability value does not exceed the predefined probability threshold, not determining a relation representative and not linking the relation representative to the selected location-related information.

23. The method according to claim 22, wherein each relation representative of the at least one relation representative comprises a probability value and a counter of the respective relation representative being indicative of the number of samples counts used for determining the respective relation representative, and wherein said determining a probability value being indicative of an estimation of a relation between the selected location-related information and the name information associated with the relation representative at least partially based on the respective relation representative comprises determining the probability at least partially based on the weight of the respective relation representative and the counter of the respective relation representative.

24. The method according to claim 22, wherein each relation representative of the at least one relation representative further comprises a similarity measure, and wherein said determining a probability value being indicative of an estimation of a relation between the selected location-related information and the point of interest associated with the relation representative is further at least partially based on the similarity measure of the respective relation representative.

25. The method according to any of claims 19 to 24, wherein it is determined not to be possible to link a point of interest information with the selected location-related information if at least one of the following holds:

- the counter of each relation representative of the at least one relation representative is not higher than a predefined counter threshold; and
- the maximum distance between the location of two samples of the two or more samples associated with the selected location-related information is below a predefined second distance threshold.

26. The method according to any of the preceding claims, comprising combining at least two samples of the plurality of samples to one combined sample and replacing the at least two samples with the combined sample in the plurality of samples.

27. The method according to claim 26, wherein at least two samples are combined if the two samples are obtained by the same radio interface of a mobile device and contain correlated information.

28. The method according to any of the preceding claims, comprising identifying at least one set of two or more samples of the plurality of samples, wherein each sample of each set of the two or more samples are associated with a same predefined location-related information.

29. The method according to claim 28, comprising selecting a location-related information and determining a location-related information being associated with an identified set of two or more samples that at least partially matches with the selected location-related information.

30. A computer program code, the computer program code when executed by a processor causing an apparatus to perform the method according to any of claims 1 to 29.

31. An apparatus, the apparatus comprising means for performing the method according to any of claims 1 to 29.

32. The apparatus according to claim 31, wherein the apparatus is at least one server or a mobile device

**Patentansprüche**

1. Verfahren, umfassend:
Durchführen (102) für jede Probe von zwei oder mehr Proben einer Vielzahl von Proben, wobei jede Probe der Vielzahl von Proben mit einem Ort und mit mindestens einer ortsbezogenen Information assoziiert ist, und wobei die mindestens eine ortsbezogene Information, die mit einer Probe der Vielzahl von Proben assoziiert ist, durch mindestens eine Schnittstelle einer mobilen Vorrichtung erhalten wurde, und wobei jede Probe der zwei oder mehr Proben mit derselben vordefinierten ortsbezogenen Information assoziiert ist: Identifizieren (210) von mindestens einer Namensinformation von mindestens einem Punkt von Interesse einer Vielzahl von Punkten von Interesse zumindest teilweise basierend auf dem Ort von einer oder mehreren Proben der zwei oder mehr Proben und auf einem Ort, der mit einem jeweiligen Punkt von Interesse des mindestens einen Punktes von Interesse assoziiert ist, wobei jeder Punkt von Interesse der Vielzahl von Punkten von Interesse mit einem Ort und mit einer Namensinformation assoziiert ist; wobei das Verfahren ferner umfasst: Bestimmen (220) eines Beziehungsrepräsentanten, der eine Beziehung zwischen der vordefinierten ortsbezogenen Information und der Namensinformation anzeigt, für jede identifizierte Namensinformation, wobei der Beziehungsrepräsentant, der eine Beziehung zwischen der vordefinierten ortsbezogenen Information und dem jeweiligen Punkt von Interesse anzeigt, einen Wert $C_{k,l}$ umfasst oder damit verbunden ist, der entweder die Anzahl von Punkten von Interesse anzeigt, die in Bezug auf den jeweiligen Beziehungsrepräsentanten berücksichtigt wurden, oder die Anzahl der Probe(n) angibt, die in Bezug auf den jeweiligen Beziehungsrepräsentanten berücksichtigt wurden.

2. Verfahren nach Anspruch 1, wobei das Bestimmen eines Beziehungsrepräsentanten, der eine Beziehung zwischen der vordefinierten ortsbezogenen Information und der Namensinformation anzeigt, für jede identifizierte Namensinformation, zumindest teilweise auf der Grundlage von zumindest einer Probe der zwei oder mehr Proben, die mit derselben vordefinierten ortsbezogenen Information assoziiert sind, und zumindest teilweise auf der Grundlage von zumindest einem Punkt von Interesse aus der Vielzahl von Punkten durchgeführt wird insbesondere unter Verwendung eines Klassifizierungsalgorithmus.

3. Verfahren nach Anspruch 1 oder 2, wobei dieser Beziehungsrepräsentant, der eine Beziehung zwischen der vordefinierten ortsbezogenen Information und der Namensinformation anzeigt, zumindest teilweise anhand eines zuvor bestimmten Beziehungsrepräsentanten bestimmt wird, der eine Beziehung zwischen der vordefinierten ortsbezogenen Information und der Namensinformation anzeigt, wenn ein solcher zuvor bestimmter Beziehungsrepräsentant verfügbar ist.

4. Verfahren nach einem der Ansprüche 1 bis 3, wobei das Identifizieren von mindestens einer Namensinformation von mindestens einem Punkt von Interesse einer Vielzahl von Punkten von Interesse das Auswählen des mindestens einen Punktes von Interesse aus einer Vielzahl von Punkten von Interesse in der Weise umfasst, dass für jeden ausgewählten Punkt von Interesse der mit dem jeweiligen ausgewählten Punkt von Interesse verbundene Ort ein Abstandskriterium in Bezug auf den mit der jeweiligen Probe der zwei oder mehr Proben verbundenen Ort erfüllt, mehreren Proben zugeordnet ist.

5. Verfahren nach Anspruch 4, wobei das Abstandskriterium erfüllt ist, wenn der Abstand zwischen dem Ort, der mit dem jeweiligen ausgewählten Punkt von Interesse assoziiert ist, und dem Ort, der mit der jeweiligen Probe der zwei oder mehr Proben assoziiert ist, kleiner ist als eine vordefinierter Abstandsschwelle.

6. Verfahren nach einem der Ansprüche 1 bis 5, wobei der Beziehungsrepräsentant, der eine Beziehung zwischen der vordefinierten ortsbezogenen Information und den Namensinformation anzeigt, zumindest teilweise eine Wahrscheinlichkeit anzeigt, dass die vordefinierten ortsbezogenen Information mit der Namensinformation übereinstimmt.

7. Verfahren nach einem der vorhergehenden Ansprüche, wobei jedem Punkt von Interesse von mindestens einem Punkt von Interesse der Vielzahl von Punkten von Interesse eine Namensinformation zugeordnet ist, wobei die Namensinformation ein Identifikator des Punktes von Interesse ist, wobei insbesondere der Identifikator einer der folgenden ist:

   - ein Identifikator eines Zugangspunkts, insbesondere eine SSID oder eine URL;
   - ein Identifikator einer Geschäftseinheit, insbesondere ein Name der Geschäftseinheit;
   - eine Kennung einer Straße, insbesondere ein Straßenname;
   - eine Kennung eines Gebäudes, insbesondere ein Name eines Gebäudes.

8. Verfahren nach Anspruch 7, wobei die ortsbezogenen Informationen zumindest teilweise durch eine Zeichenkette dargestellt wird.

9. Verfahren nach einem der vorhergehenden Ansprüche, wobei die mindestens eine ortsbezogene Information, die mit einer Probe aus der Vielzahl von Proben assoziiert ist, mindestens eine ortsbezogene Zeichenfolge umfasst, die auf der Grundlage der mindestens einen Schnittstelle des Mobilgeräts bei der Gewinnung der jeweiligen Probe erhalten wird, wobei insbesondere eine ortsbezogene Zeichenfolge der mindestens einen ortsbezogenen Zeichenfolge Informationen bezüglich der Umgebung des Mobilgeräts bei der Gewinnung der jeweiligen Probe umfasst.

10. Verfahren nach einem der vorhergehenden Ansprüche, wobei die mindestens eine ortsbezogene Information, die mit einer Probe der Vielzahl von Proben assoziiert ist, mindestens eine ortsbezogene Kennung umfasst, wobei insbesondere die mindestens eine ortsbezogene Kennung mindestens eines der folgenden ist:

   - eine Kennung eines Zugangspunktes, insbesondere eine SSID oder eine URL;
   - mindestens ein Foto;
   - ein Name, der aus mindestens einem Foto extrahiert wird, insbesondere aus mindestens einem an dem Ort aufgenommenen Foto, der mit der jeweiligen Probe assoziiert ist;
   - ein Name, der aus mindestens einem Video extrahiert wurde, insbesondere aus mindestens einem Video, das an dem Ort aufgenommen wurde, der mit der jeweiligen Probe assoziiert ist;
   - ein Name, der aus mindestens einer Audioprobe extrahiert wurde, insbesondere aus mindestens einer Audioprobe, die an dem Ort aufgenommen wurde, der mit der jeweiligen Probe assoziiert ist.

11. Verfahren nach einem der vorangehenden Ansprüche, wobei die mindestens eine ortsbezogene Information, die mit einer Probe aus der Vielzahl von Proben assoziiert ist, durch mindestens eine Schnittstelle eines mobilen Geräts erhalten wurden, und wobei die mindestens eine Schnittstelle des mobilen Geräts mindestens eine der folgenden ist:

   - einer Funkschnittstelle;
   - einer Kamera;
   - einer Nahfeldkommunikationsschnittstelle;
   - eine Audio-Schnittstelle, insbesondere ein Mikrofon.

12. Verfahren nach einem der vorhergehenden Ansprüche, wobei der einer Probe aus der Vielzahl von Proben zugeordnete Ort repräsentativ für eine Ortsschätzung ist, an der das mobile Gerät die Probe erfasst hat, und wobei insbesondere die Ortsschätzung bestimmt wird auf der Grundlage von mindestens einem von:

   - GNSS-Positionierung des mobilen Geräts;
   - Funknetzpositionierung des mobilen Geräts,
   - sensorbasierter Positionierung des mobilen Geräts.

13. Verfahren nach Anspruch 12, wobei die Ortsschätzung Ortskoordinaten umfasst, die die Position angeben, an der das mobile Gerät die Probe aufgenommen hat, und wobei insbesondere die Ortsschätzung weiterhin Höheninformationen und/oder einen Etagenindex des Ortes umfasst, an dem das mobile Gerät die Probe aufgenommen hat.

14. Verfahren nach einem der vorangehenden Ansprüche, wobei der Ort des Punktes von Interesse aus der Vielzahl der Punkte von Interesse mit einem Ort verbunden ist, der eine Ortskoordinate umfasst, die den Punkt von Interesse anzeigt, wobei der Ort insbesondere Höheninformationen und/oder einen Etagenindex des Punktes von Interesse umfasst.

15. Verfahren nach einem der Ansprüche 1 bis 14, wobei der Beziehungsrepräsentant, der eine Beziehung zwischen der vordefinierten ortsbezogenen Information und dem jeweiligen Punkt von Interesse anzeigt, mindestens eines der folgenden Elemente umfasst oder damit verbunden ist:

   - einem Wert $W_{k,l}$, der ein Abstandsmaß angibt, das auf der Grundlage eines geschätzten Abstandsindikators zwischen dem Ort jedes Punktes von Interesse des mindestens einen identifizierten Punktes von Interesse, der zur Bestimmung des jeweiligen Beziehungsrepräsentant verwendet wurde, und dem jeweiligen Ort der Probe $L_{k,l}$, die zur Identifizierung des jeweiligen Punktes von Interesse verwendet wurde, oder
   - einem Wert $F_{k,l}$, der einen Wert repräsentiert, der eine Ähnlichkeit der Namensinformationen anzeigt.

16. Verfahren nach einem der vorhergehenden Ansprüche, umfassend das Aktualisieren der Vielzahl von Proben, wobei insbesondere das Aktualisieren der Vielzahl von Proben mindestens eines von Folgendem umfasst:

- Einfügen mindestens einer neuen Probe in die Vielzahl von Proben, wobei jede Probe der mindestens eine neue Probe mit einem Ort und
mit mindestens einer ortsbezogenen Information verbunden ist, und wobei die mindestens eine ortsbezogene Information, die mit einer Probe der mindestens eine neue Probe assoziiert ist, durch mindestens eine Schnittstelle eines mobilen Geräts erhalten wurde;
- Entfernen mindestens einer Probe aus der Vielzahl von Proben.

17. Verfahren nach einem der vorhergehenden Ansprüche, umfassend einen Algorithmus für maschinelles Lernen zum Bestimmen, für jeden identifizierten Punkt von Interesse, eines Beziehungsrepräsentanten, der eine Beziehung zwischen der vordefinierten ortsbezogenen Information und dem jeweiligen Punkt von Interesse anzeigt, wobei insbesondere der maschinelle Lernalgorithmus einer der folgenden ist:

- ein Bayes'sches Verfahren,
- eine neuronales Netz,
- eine Support-Vektor-Maschine,
- ein Algorithmus der nächsten Nachbarn,
- ein Entscheidungsbaum.

18. Verfahren nach einem der vorhergehenden Ansprüche, umfassend das Identifizieren mindestens einer ortsbezogenen Information, wobei jede ortsbezogene Information der identifizierten mindestens einen ortsbezogenen Information mit mindestens einer vordefinierten Mindestanzahl von Proben der Mehrzahl von Proben assoziiert ist, und Durchführen, für jede identifizierte ortsbezogene Information das Verfahren nach einem der vorhergehenden Ansprüche, wobei die jeweilige identifizierte ortsbezogene Information die vordefinierte ortsbezogene Information repräsentiert,
und wobei insbesondere die vordefinierte Mindestanzahl von Proben der Vielzahl von Proben eine der folgenden ist:

- 2;
- 5;
- 10;
- 15.

19. Verfahren nach einem der vorhergehenden Ansprüche, umfassend:

- Auswählen einer ortsbezogenen Information einer Probe aus der Vielzahl von Proben, wobei die ausgewählte ortsbezogene Information mit mindestens einem Beziehungsrepräsentanten verbunden ist,
wobei jeder Beziehungsrepräsentant des mindestens einen Beziehungsrepräsentanten eine Beziehung zwischen der ausgewählten ortsbezogenen Information und einer Namensinformation anzeigt, und
- Bestimmen, falls möglich, welche Namensinformation mit der ausgewählten ortsbezogenen Information verknüpft werden kann zumindest teilweise auf der Grundlage des mindestens einen Beziehungsrepräsentanten, der mit der ausgewählten ortsbezogenen Information assoziiert ist.

20. Verfahren nach Anspruch 19, wobei das Bestimmen, falls möglich, welche Namensinformation mit der ausgewählten ortsbezogenen Information verknüpft werden kann zumindest teilweise auf der Grund-lage des mindestens einen Beziehungsrepräsentanten, der mit der ausgewählten ortsbezogenen Information assoziiert ist, umfasst:

- Bestimmen eines Beziehungsrepräsentanten des mindestens einen Beziehungsrepräsentanten, der ein Übereinstimmungskriterium erfüllt, und
- Verknüpfen des mit dem ermittelten Beziehungsrepräsentanten assoziierten Punktes von Interesse mit der ausgewählten ortsbezogenen Information.

21. Verfahren nach Anspruch 20, wobei jeder Beziehungsrepräsentant der mindestens einen Beziehungsrepräsentanten ein Gewicht und einen Zähler des jeweiligen Beziehungsrepräsentanten umfasst, der die Anzahl der Probenzählungen angibt, die zur Bestimmung des jeweiligen Beziehungsrepräsentanten verwendet wurden, und wobei das Übereinstimmungskriterium für einen Beziehungsrepräsentanten erfüllt ist, wenn:

- der Zähler des jeweiligen Beziehungsrepräsentanten eine vordefinierte Zählerschwelle überschreitet; und
- das Gewicht des jeweiligen Beziehungsrepräsentanten die höchste Qualität der Beziehung von jedem Gewicht von einem oder mehreren Beziehungsrepräsentanten des mindestens einen Beziehungsrepräsentanten anzeigt, wobei der Zähler jedes Beziehungsrepräsentanten des einen oder der mehreren Beziehungsrepräsentanten den vordefinierten Zählerschwellenwert überschreitet.

22. Das Verfahren nach einem der Ansprüche 19 bis 21, umfassend für jeden Beziehungsrepräsentanten der mindestens einen Beziehungsrepräsentanten:

- Bestimmen eines Wahrscheinlichkeitswertes, der eine Schätzung einer Beziehung zwischen der ausgewählten ortsbezogenen Information und dem mit dem Beziehungsrepräsentanten assoziierten Punkt von Interesse anzeigt, zumindest teilweise basierend auf dem jeweiligen Beziehungsrepräsentanten; wobei das Verfahren ferner umfasst
- Bestimmen eines Beziehungsrepräsentanten des mindestens einen Beziehungsrepräsentanten, der ein Übereinstimmungskriterium erfüllt, durch Bestimmen des Beziehungsrepräsentanten, für den der Beziehungsrepräsentant mit dem höchsten Wahrscheinlichkeitswert bestimmt wurde,
- wobei, insbesondere:
- der höchste Wahrscheinlichkeitswert eine vordefinierte Wahrscheinlichkeitsschwelle überschreiten muss, und wenn der höchste Wahrscheinlichkeits-wert die vordefinierte Wahrscheinlichkeitsschwelle nicht überschreitet, keine Bestimmung eines Beziehungsrepräsentanten und keine Verknüpfung des Beziehungsrepräsentanten mit der ausgewählten ortsbezogenen Information.

23. Verfahren nach Anspruch 22, wobei jeder Beziehungsrepräsentant der mindestens eine des mindestens einen Beziehungsrepräsentanten einen Wahrscheinlichkeitswert und einen Zähler des jeweiligen Beziehungsrepräsentanten umfasst, der die Anzahl der zur Bestimmung des jeweiligen Beziehungsrepräsentanten verwendeten Probenzählungen anzeigt, und wobei das Bestimmen eines Wahrscheinlichkeitswerts, der eine Schätzung einer Beziehung zwischen den ausgewählten ortsbezogenen Informationen und den mit dem Beziehungsrepräsentanten verbundenen Namensinformationen anzeigt, zumindest teilweise auf der Grundlage des jeweiligen Beziehungsrepräsentanten das Bestimmen der Wahrscheinlichkeit zumindest teilweise auf der Grundlage des Gewichts des jeweiligen Beziehungsrepräsentanten und dem Zähler des jeweiligen Beziehungsrepräsentanten umfasst.

24. Verfahren nach Anspruch 22, wobei jeder Beziehungsrepräsentant des mindestens einen Beziehungsrepräsentanten ferner ein Ähnlichkeitsmaß umfasst, und wobei das Bestimmen eines Wahrscheinlichkeitswert, der eine Schätzung einer Beziehung zwischen der ausgewählten ortsbezogenen Information und dem Beziehungsrepräsentanten zugeordneten Punkt von Interesse anzeigt, ferner zumindest teilweise auf dem Ähnlichkeitsmaß des jeweiligen Beziehungsrepräsentanten basiert.

25. Verfahren nach einem der Ansprüche 19 bis 24, wobei festgestellt wird, dass es nicht möglich ist eine Punkt von Interesse Information mit der ausgewählten ortsbezogenen Information zu verknüpfen, wenn mindestens eine der folgenden Bedingungen erfüllt ist:

- der Zähler jedes Beziehungsrepräsentanten des mindestens einen Beziehungsrepräsentanten ist nicht höher als eine vordefinierte Zählerschwelle; und
- der maximale Abstand zwischen dem Ort von zwei Proben der zwei oder mehr Proben die mit den ausgewählten ortsbezogenen Informationen verbunden sind, unter einem vordefinierten zweiten Abstandsschwellenwert liegt.

26. Verfahren nach einem der vorhergehenden Ansprüche, umfassend das Kombinieren von mindestens zwei Proben der Vielzahl von Proben zu einer kombinierten Probe und Ersetzen der mindestens zwei Proben durch die kombinierte Probe in der Vielzahl von Proben.

27. Verfahren nach Anspruch 26, wobei mindestens zwei Proben kombiniert werden, wenn die beiden Proben durch dieselbe Funkschnittstelle eines mobilen Geräts erhalten werden und korrelierte Informationen enthalten.

28. Verfahren nach einem der vorhergehenden Ansprüche, umfassend das Identifizieren mindestens eines Satzes von zwei oder mehr Proben der Vielzahl von Proben, wobei jede Probe jedes Satzes der zwei oder mehr Proben mit derselben vordefinierten ortsbezogenen Information verbunden sind.

29. Verfahren nach Anspruch 28, umfassend das Auswählen einer ortsbezogenen Information und Bestimmen einer ortsbezogenen Information, die mit einem identifizierten Satz von zwei oder mehr Proben assoziiert sind, die zumindest teilweise mit den ausgewählten ortsbezogenen Informationen übereinstimmen.

**30.** Computerprogrammcode, wobei der Computerprogrammcode bei Ausführung durch einen Prozessor eine Vorrichtung veranlasst, das Verfahren nach einem der Ansprüche 1 bis 29 durchzuführen.

**31.** Vorrichtung, wobei die Vorrichtung Mittel zur Durchführung des Verfahrens nach einem der Ansprüche 1 bis 29 umfasst.

**32.** Vorrichtung nach Anspruch 31, wobei die Vorrichtung mindestens ein Server oder ein mobiles Gerät ist.

**Revendications**

**1.** Une méthode comprenant

- exécuter (102) pour chaque échantillon de deux échantillons ou plus d'une pluralité d'échantillons, où chaque échantillon de la pluralité d'échantillons est associé à un emplacement et à au moins une information relative à un emplacement, et où l'au moins une information relative à un emplacement associée à un échantillon de la pluralité d'échantillons a été obtenue par au moins une interface d'un dispositif mobile, et où chaque échantillon des deux échantillons ou plus est associé à une information relative à un emplacement prédéfinie similaire ou identique ;
- identifier (210) au moins une information de nom d'au moins un point d'intérêt d'une pluralité de points d'intérêt au moins partiellement sur la base de l'emplacement d'un ou plusieurs échantillons des deux échantillons ou plus et d'un emplacement associée à un point d'intérêt respectif de l'au moins un point d'intérêt, où chaque point d'intérêt de la pluralité de points d'intérêt est associé à un emplacement et à une information de nom; la méthode comprenant en outre :

- déterminer (220), pour chaque information de nom identifiée, un représentant de relation étant indicatif d'une relation entre l'information prédéfinie relative à un emplacement et l'information de nom, dans lequel le représentant de relation étant indicatif d'une relation entre l'information relative à un emplacement prédéfinie et le point d'intérêt respectif comprend ou est associé à une valeur $C_{k,j}$ indiquant soit le nombre de point(s) d'intérêt qui ont été considérés par rapport au représentant de relation respectif, soit le nombre d'échantillon(s) qui ont été considérés par rapport au représentant de relation respectif.

**2.** La méthode selon la revendication 1, dans laquelle ladite détermination, pour chaque information de nom identifiée, d'un représentant de relation indiquant une relation entre l'information relative à un emplacement prédéfinie et l'information de nom, est effectuée au moins partiellement sur la base d'au moins un échantillon parmi les deux échantillons ou plus associés à une information relative à un emplacement prédéfinie similaire ou identique et au moins partiellement sur la base d'au moins un point d'intérêt de la pluralité de points d'intérêt, en particulier en utilisant un algorithme de classification.

**3.** La méthode selon la revendication 1 ou 2, dans laquelle ce représentant de relation indiquant une relation entre l'information relative à un emplacement prédéfinie et l'information de nom est au moins partiellement déterminé sur la base d'un représentant de relation précédemment déterminé indiquant une relation entre l'information relative à un emplacement prédéfinie et l'information de nom, si un tel représentant de relation précédemment déterminé est disponible.

**4.** La méthode selon l'une des revendications 1 à 3, dans laquelle l'identification d'au moins une information de nom d'au moins un point d'intérêt d'une pluralité de points d'intérêt comprend la sélection de l'au moins un point d'intérêt d'une pluralité de points d'intérêt de sorte que, pour chaque point d'intérêt sélectionné, l'emplacement associé au point d'intérêt sélectionné respectif remplisse un critère de distance par rapport à l'emplacement associé à l'échantillon respectif parmi les deux échantillons ou plus.

**5.** La méthode selon la revendication 4, dans laquelle le critère de distance est rempli si la distance entre l'emplacement associé au point d'intérêt sélectionné respectif et l'emplacement associé à l'échantillon respectif des deux échantillons ou plus est inférieure à un seuil de distance prédéfini.

**6.** La méthode selon l'une des revendications 1 à 5, dans laquelle le représentant de relation indiquant une relation entre l'information relative à un emplacement prédéfinie et le point d'intérêt respectif indique au moins partiellement une probabilité que l'information relative à un emplacement prédéfinie corresponde à l'information de nom.

**7.** La méthode selon l'une des revendications précédentes, dans laquelle chaque point d'intérêt d'au moins un point d'intérêt de la pluralité de points d'intérêt est associé à une information de nom, dans laquelle l'information de nom est un identifiant du point d'intérêt, dans laquelle, en particulier, l'identifiant est l'un des suivants :

- un identifiant d'un point d'accès, en particulier un SSID ou une URL ;
- un identifiant d'une entité commerciale, en particulier un nom de l'entité commerciale ;
- un identifiant d'une rue, en particulier un nom de rue ;
- un identifiant d'un bâtiment, en particulier un nom de bâtiment.

**8.** La méthode selon la revendication 7, dans laquelle l'information relative à un emplacement est représentée au moins partiellement par une chaîne.

**9.** La méthode selon l'une quelconque des revendications précédentes, dans laquelle l'au moins une information relative à un emplacement associée à un échantillon de la pluralité d'échantillons comprend au moins une chaîne relative à un emplacement obtenue sur la base d'au moins une interface du dispositif mobile lors de l'obtention de l'échantillon respectif, où, en particulier, une chaîne relative à un emplacement de l'au moins une chaîne relative à un emplacement comprend des informations concernant l'environnement du dispositif mobile lors de l'obtention de l'échantillon respectif.

**10.** La méthode selon l'une des revendications précédentes, dans laquelle l'au moins une information relative à un emplacement associée à un échantillon de la pluralité d'échantillons comprend au moins un identifiant relatif à un emplacement, où, en particulier, l'au moins un identifiant relatif à un emplacement est au moins l'un des éléments suivants :

- un identifiant d'un point d'accès, en particulier un SSID ou une URL ;
- au moins une photo;
- un nom extrait d'au moins une photo, en particulier d'au moins une photo capturée à l'emplacement associé à l'échantillon respectif ;
- un nom extrait d'au moins une vidéo, en particulier d'au moins une vidéo capturée à l'emplacement associé à l'échantillon respectif;
- un nom extrait d'au moins un échantillon audio, en particulier d'au moins un échantillon audio capturé à l'emplacement associé à l'échantillon respectif.

**11.** La méthode selon l'une des revendications précédentes, dans laquelle l'au moins une information relative à un emplacement associée à un échantillon de la pluralité d'échantillons a été obtenue par au moins une interface d'un dispositif mobile, et dans laquelle l'au moins une interface du dispositif mobile est au moins l'une des suivantes :

- une interface radio ;
- un appareil photo ;
- une interface de communication en champ proche ;
- une interface audio, en particulier un microphone.

**12.** La méthode selon l'une quelconque des revendications précédentes, dans laquelle l'emplacement associé à un échantillon de la pluralité d'échantillons est représentatif d'une estimation d'emplacement où le dispositif mobile a capturé l'échantillon, et dans laquelle, en particulier, l'estimation d'emplacement est déterminée sur la base d'au moins l'un des éléments suivants :

- positionnement GNSS du dispositif mobile ;
- positionnement du dispositif mobile par réseau radio,
- positionnement du dispositif mobile sur la base de capteurs.

**13.** La méthode selon la revendication 12, dans laquelle l'estimation d'emplacement comprend des coordonnées d'emplacement indiquant la position où le dispositif mobile a capturé l'échantillon, et, dans laquelle, en particulier, l'estimation d'emplacement comprend en outre une information d'altitude et/ou un indice d'étage de l'emplacement où le dispositif mobile a capturé l'échantillon.

**14.** La méthode selon l'une des revendications précédentes, dans laquelle l'emplacement du point d'intérêt de la pluralité de points d'intérêt est associé à un emplacement comprend des coordonnées d'emplacement indiquant le point d'intérêt, dans laquelle, en particulier, l'emplacement comprend une information d'altitude et/ou un indice d'étage du point d'intérêt.

**15.** La méthode selon l'une des revendications 1 à 14, dans laquelle le représentant de relation indiquant une relation entre l'information relative à un emplacement prédéfinie et le point d'intérêt respectif comprend ou est associé à au moins l'un des éléments suivants :

- une valeur Wk,l indiquant une mesure de distance déterminée sur la base d'un indicateur de distance estimé entre l'emplacement de chaque point d'intérêt d'au moins un point d'intérêt identifié utilisé pour déterminer le représentant de relation respectif et l'emplacement respectif de l'échantillon Lk,i utilisé pour identifier le point d'intérêt respectif, ou
- une valeur Fk,l représentant une valeur indiquant une similitude d'information de nom.

**16.** La méthode selon l'une des revendications précédentes, comprenant la mise à jour de la pluralité d'échantillons, dans laquelle, en particulier, ladite mise à jour de la pluralité d'échantillons comprend au moins l'un des éléments suivants :

- inclure au moins un nouvel échantillon dans la pluralité d'échantillons, où chaque échantillon d'au moins un nouvel échantillon est associé à un emplacement et à au moins une information relative à un emplacement, et où l'au moins une information relative à un emplacement associée à un échantillon de l'au moins un nouvel échantillon a été obtenue par au moins une interface d'un dispositif mobile;
- retirer au moins un échantillon de la pluralité d'échantillons.

**17.** La méthode selon l'une quelconque des revendications précédentes, comprenant un algorithme d'apprentissage automatique pour ladite détermination, pour chaque point d'intérêt identifié, un représentant de relation indiquant une relation entre l'information relative à un emplacement prédéfinie et le point d'intérêt respectif, où, en particulier, ledit algorithme d'apprentissage automatique est l'un parmi :

- une méthode bayésienne,
- un réseau neuronal,
- une machine à vecteur de support,
- un algorithme du plus proche voisin,
- un arbre de décision.

**18.** La méthode selon l'une quelconque des revendications précédentes, comprenant identifier au moins une information relative à un emplacement, où chaque information relative à un emplacement de l'au moins une information relative à un emplacement identifiée est associée à au moins un nombre minimum prédéfini d'échantillons de la pluralité d'échantillons, et exécuter, pour chaque information relative à un emplacement identifiée, la méthode selon l'une quelconque des revendications précédentes, dans laquelle l'information relative à un emplacement identifiée respective représente l'information relative à un emplacement prédéfinie, et, dans laquelle, en particulier, le nombre minimum prédéfini d'échantillons de la pluralité d'échantillons est l'un des suivants: :

- 2 ;
- 5 ;
- 10;
- 15.

**19.** La méthode selon l'une des revendications précédentes, comprenant :

- sélectionner une information relative à un emplacement d'un échantillon de la pluralité d'échantillons, l'information relative à un emplacement sélectionnée étant associée à au moins un représentant de relation, chaque représentant de relation de l'au moins un représentant de relation étant indicatif d'une relation entre l'information relative à un emplacement sélectionnée et une information de nom, et
- déterminer, si possible, quelle information de nom peut être liée à l'information sélectionnée sur l'emplacement, au moins en partie sur la base de l'au moins un représentant de relation associé à l'information relative à un emplacement sélectionnée.

20. La méthode selon la revendication 19, dans laquelle ladite détermination, si possible, de quel point d'intérêt peut être à l'information relative à un emplacement sélectionnée, au moins partiellement sur la base d'au moins un représentant de relation associé à l'information relative à un emplacement sélectionnée, comprend:

    - déterminer un représentant de relation de l'au moins un représentant de relation qui remplit un critère de correspondance, et
    - lier le point d'intérêt associé au représentant de relation déterminé à l'information relative à un emplacement sélectionnée.

21. La méthode selon la revendication 20, dans laquelle chaque représentant de relation de l'au moins un représentant de relation comprend un poids et un compteur du représentant de relation respectif indiquant le nombre de comptes d'échantillons utilisés pour déterminer le représentant de relation respectif, et dans laquelle le critère de correspondance est rempli pour un représentant de relation si :

    - le compteur du représentant de relation respectif dépasse un seuil prédéfini ; et
    - le poids du représentant de relation respectif indique la qualité de relation la plus élevée de chaque poids d'un ou de plusieurs représentants de relation de l'au moins un représentant de relation, le compteur de chaque représentant de relation de l'un ou de plusieurs représentants de relation dépassant le seuil de compteur prédéfini.

22. La méthode selon l'une des revendications 19 à 21, comprenant, pour chaque représentant de relation de l'au moins un représentant de relation :

    - déterminer une valeur de probabilité indiquant une estimation d'une relation entre l'information relative à un emplacement sélectionnée et le point d'intérêt associé au représentant de relation, au moins partiellement sur la base du représentant de relation respectif ;
    la méthode comprenant en outre
    - déterminer un représentant de relation de l'au moins un représentant de relation qui remplit un critère de correspondance en déterminant le représentant de relation pour lequel la valeur de probabilité la plus élevée est déterminée,
    - où, en particulier
    - la valeur de probabilité la plus élevée doit dépasser un seuil de probabilité prédéfini, et si la valeur de probabilité la plus élevée ne dépasse pas le seuil de probabilité prédéfini, ne pas déterminer un représentant de relation et ne pas relier le représentant de relation à l'information relative à un emplacement sélectionnée.

23. La méthode selon la revendication 22, dans laquelle chaque représentant de relation de l'au moins un représentant de relation comprend une valeur de probabilité et un compteur du représentant de relation respectif indiquant le nombre de comptes d'échantillons utilisés pour déterminer le représentant de relation respectif, et dans laquelle ladite détermination d'une valeur de probabilité indiquant une estimation d'une relation entre l'information relative à un emplacement sélectionnée et l'information de nom associée au représentant de relation au moins partiellement sur la base du représentant de relation respectif comprend la détermination de la probabilité au moins partiellement sur la base du poids du représentant de relation respectif et du compteur du représentant de relation respectif.

24. La méthode selon la revendication 22, dans laquelle chaque représentant de relation de l'au moins un représentant de relation comprend en outre une mesure de similarité, et dans laquelle ladite détermination d'une valeur de probabilité indiquant une estimation d'une relation entre l'information relative à un emplacement sélectionnée et le point d'intérêt associé au représentant de relation est en outre au moins partiellement basée sur la mesure de similarité du représentant de relation respectif.

25. La méthode selon l'une des revendications 19 à 24, dans laquelle il est déterminé qu'il n'est pas possible de relier une information de point d'intérêt à l'information relative à un emplacement sélectionnée si au moins l'une des conditions suivantes est remplie :

    - le compteur de chaque représentant de relation de l'au moins un représentant de relation n'est pas supérieur à un seuil de compteur prédéfini ; et

- la distance maximale entre l'emplacement de deux échantillons des deux échantillons ou plus associés à l'information relative à un emplacement sélectionnée est inférieure à un second seuil de distance prédéfini.

26. La méthode selon l'une des revendications précédentes, comprenant la combinaison d'au moins deux échantillons de la pluralité d'échantillons en un échantillon combiné et le remplacement les au moins deux échantillons par l'échantillon combiné dans la pluralité d'échantillons.

27. La méthode selon la revendication 26, dans laquelle au moins deux échantillons sont combinés si les deux échantillons sont obtenus par la même interface radio d'un dispositif mobile et contiennent des informations corrélées.

28. La méthode selon l'une des revendications précédentes, comprenant l'identification d'au moins un ensemble de deux échantillons ou plus de la pluralité d'échantillons, dans laquelle chaque échantillon de chaque ensemble des deux échantillons ou plus est associé à une information relative à un emplacement prédéfinie similaire ou identique.

29. La méthode selon la revendication 28, comprenant la sélection d'une information relative à un emplacement et la détermination d'une information relative à un emplacement associée à un ensemble identifié de deux échantillons ou plus qui correspond au moins partiellement à l'information relative à un emplacement sélectionnée.

30. Code de programme d'ordinateur, le code de programme d'ordinateur, lorsqu'il est exécuté par un processeur, amenant un appareil à exécuter la méthode selon l'une des revendications 1 à 29.

31. Un appareil, l'appareil comprenant des moyens pour exécuter la méthode selon l'une des revendications 1 à 29.

32. L'appareil selon la revendication 31, dans laquelle l'appareil est au moins un serveur ou un dispositif mobile.

100

Processor ⟋101

102

Memory with program code for

      performing for each sample of two or more samples of a plurality of samples, wherein each sample of the plurality of samples is associated with a location and with at least one location-related information, and wherein the at least one location-related information associated with a sample of the plurality of samples was obtained by at least one interface of a mobile device, and wherein each sample of the two or more samples is associated with a similar or same predefined location-related information:

    (i)   identifying at least one name information of at least one point of interest of a plurality of points of interest at least partially based on the location of one or more samples of the two or more samples and on a location being associated with a respective point of interest of the at least one point of interest, wherein each point of interest of the plurality of points of interest is associated with a location and with a name information;

the program code further for

   -    determining, for each identified name information, a relation representative being indicative of a relation between the predefined location-related information and the name information.

Apparatus

## Fig.1

200

select a sample of the two or more samples — 205

identify at least one name information of at least one point of interest of a plurality of points of interest at least partially based on the location of one or more samples of the two or more samples and on a location being associated with a respective point of interest of the at least one point of interest, wherein each point of interest of the plurality of points of interest is associated with a location and with a name information — 210

215

YES  < further sample of the two or more samples? >

NO

determine, for each identified name information, a relation representative being indicative of a relation between the predefined location-related information and the name information — 220

Fig.2a

208

identify at least one set of two or more samples of the plurality of samples, wherein each sample of each set of the two or more samples is associated with a similar or same predefined location-related information — 260

Fig.2b

Fig.3

400

410
Identify two or more samples of the plurality of samples, wherein
each sample of the two or more samples is associated with
a similar or same predefined location-related information

420
select a sample Lk,i of the identified two or more samples

430
identify at least one point of interest of the plurality of points
of interest, wherein the location of each of the identified
at least one point of interest fulfills a distance criterion with
repect to location of the selected sample sample

440
YES   further sample of the two or more samples?

NO

Fig.4

500

determine name information for a
location-related information LRI=k at least partially based on the
determined at least one relation representative $R_{k,l}$

510

Fig.5a

500'

select location-related information LRI=k

530

is it possible to link the selected location-related
information to a name information?

540

NO

YES

determine name information for a
location-related information LRI=k at least partially based on the
determined at least one relation representative $R_{k,l}$

550

560

Fig.5b

600

610

combine at least two samples of the plurality of samples to one combined sample and replace the at least two samples with the combined sample in the plurality of samples

## Fig.6

700

select location-related information 710

determine location-related information LRI of the at least one location-related information LRI that at least partially matches with the selected location-related information 720

## Fig.7

800

800

803 — Network Interface

Processor

Program Memory 801

Main Memory 802

## Fig.8

900

Flash-Memory

901

SSD-Drive

902

Harddrive

903

SD-Card

904

Memory Stick

905

Optical
Storage Medium

906

Magnetic
Storage Medium

Fig.9

**EP 3 860 163 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016019257 A1